# EUROPEAN PATENT SPECIFICATION

(11) **EP 1 251 018 B1**
(45) Date of publication and mention of the grant of the patent: **17.11.2004**
(21) Application number: 00940907.9
(22) Date of filing: 30.06.2000
(51) Int. Cl.: B60H 1/00

(54) **INSTRUMENT PANEL MODULE AND AIR CONDITIONER FOR CAR**
ARMATURENBRETTMODUL UND FAHRZEUGKLIMAANLAGE
MODULE DE TABLEAU DE BORD ET CLIMATISEUR POUR VEHICULE AUTOMOBILE

(30) Priority: 22.12.1999 JP 36372499
(43) Date of publication of application: 23.10.2002
(73) Proprietor: Zexel Valeo Climate Control Corporation, Osato-gun, Saitama 360-0193 (JP)
(72) Inventor: ARAKI, Daisuke, Zexel Valeo Climate Control Corp., Osato-gun, Saitama 360-0193 (JP); NAGANO, Hideki, Zexel Valeo Climate Control Corp., Osato-gun, Saitama 360-0193 (JP); YANAGIDA, Eiji, Zexel Valeo Climate Control Corp., Osato-gun, Saitama 360-0193 (JP); NOGUCHI, Akitoshi, Zexel Valeo Climate Ctrl Corp., Osato-gun, Saitama 360-0193 (JP); IKEDA, Katsuyuki Zexel Valeo Climate Control Corp., Osato-gun, Saitama 360-0193 (JP); NAKAMIGAWA, Tsutomu Zexel Valeo Climate Ctrl Corp., Osato-gun, Saitama 360-0193 (JP); MATSUMOTO, Takehide, Bosch Automotive Sys. Corp., Higashimatsuyama-shi, Saitama 355-86 (JP)
(74) Representative: Hofmann, Harald
(86) International application number: PCT/JP2000/004356
(87) International publication number: WO 2001/045973

(56) References cited:
- EP-A- 0 704 329
- EP-A2- 0 808 736
- GB-A- 2 346 962
- JP-U- 58 017 209
- US-A- 4 768 708
- US-A- 5 997 078

## Description

### Technical Field

This invention relates to an instrument panel module and an automotive air conditioner, which are capable of improving working efficiency of a vehicle production line, in particular, according to the features of the preamble of the independent claims.

### Background Art

As means for improving working efficiency of vehicle production lines, a so-called instrument panel module has come to draw attention (Japanese Laid-Open Patent Publication (Kokai) No. 6-227238). The instrument panel module is formed by integrating an instrument panel and an automotive air conditioner or the like, into a unit.

There has been conventionally used an automotive air conditioner which is comprised of an intake box for introducing air, a blower for blowing air from the intake box, an evaporator for cooling the air introduced by the blower from the intake box, a heater core for heating the air introduced by the blower from the intake box, an air-mixing door for adjusting the proportion between air passing through the heater core and air not passing through the same, a mode door for distributing the cooled or heated air, and a casing accommodating these devices.

The evaporator has a refrigerant pipe connected thereto, and the heater core has a hot water pipe connected thereto. The refrigerant pipe and the hot water pipe are connected to a refrigerant pipe and a hot water pipe of an engine room, on a vehicle production line.

The casing has the blower connected to a blower connection port thereof.

The casing defines therein a cold air bypass passage where the air having passed the evaporator flows, a hot air passage where the air having passed through the heater core flows, and an air-mixing space where the air flowing from the cold air bypass passage and the air flowing from the hot air passage are mixed.

The air-mixing space is located downstream of the air-mixing door. The casing is formed with a defroster outlet, a vent outlet, and a foot outlet, at respective locations downstream of the air-mixing space.

The instrument panel module is a unit formed by integrating an automotive air conditioner with the instrument panel, as described above, and therefore, it is expected that the mounting of the instrument panel module in a vehicle should require less labor than the mounting of the two components separately in a vehicle on a vehicle production line.

However, after the vehicle is supplied to market as a finished product, when the instrument panel is removed for maintenance, the automotive air conditioner has to be removed together with the instrument panel. Therefore, compared with the case of removing the instrument panel alone, the labor of workers is increased by an amount required for removing components of the conditioner, such as a refrigerant pipe and a hot water pipe, and the operations therefor become troublesome.

The EP-A-0704329 discloses an instrument panel module including an automotive air conditioner including a casing, and an instrument panel adjacent to said automotive air conditioner, according to the features of the preamble of independent claim1 of the present application.

An object of the present invention is therefore to provide an instrument panel module and an automotive air conditioner which can reduce labor of workers for removing an instrument panel for maintenance purposes.

### Disclosure of Invention

An instrument panel module according to the present invention, including an automotive air conditioner including a casing having at least one of air-introducing means for introducing air, blowing means for blowing the air from the air-introducing means, cooling means for cooling the air introduced by the blowing means from the air-introducing means, heating means for heating the air introduced by the blowing means from the air-introducing means, and air-distributing means for distributing the cooled air or the heated air, and an instrument panel adjacent to the automotive air conditioner, is characterized in that the casing is separable at least into an instrument panel-side part arranged adjacent to the instrument panel, and a fire panel-side part arranged adjacent to a fire panel, and that at least the instrument panel-side part is integrally connected to the instrument panel.

The instrument panel module according to the invention is characterized in that the instrument panel-side part and the fire panel-side part have respective connecting surfaces for connecting the instrument panel-side part and the fire panel-side part thereat.

The instrument panel module according the invention is characterized in that the instrument panel-side part can be attached to the fire panel-side part from one direction.

The instrument panel module according the invention is characterized in that air conditioner components including the air-introducing means, the blowing means, the cooling means, the heating means, and the air-distributing means are classified according to workability for mounting thereof to a vehicle, and that ones of the air conditioner components belonging to a first group are assigned to the instrument panel-side part, and ones of the air conditioner components belonging to a second group are assigned to the fire panel-side part.

The instrument panel module according the invention is characterized in that the instrument panel-side part can be attached to the fire panel-side part from one direction, that air conditioner components including the air-introducing means, the blowing means, the cooling means, the heating means, and the air-distributing means are classified according to workability for mounting thereof to a vehicle, and that ones of the air conditioner components belonging to a first group are assigned to the instrument panel-side part, and ones of the air conditioner components belonging to a second group are assigned to the fire panel-side part.

The instrument panel module according the invention is characterized in that the instrument panel-side part can be detached from the fire panel-side part in one direction.

The instrument panel module according the invention is characterized in that air conditioner components including the air-introducing means, the blowing means, the cooling means, the heating means, and the air-distributing means are classified according to maintainability, and that ones of the air conditioner components belonging to a first group are assigned to the instrument panel-side part, and ones of the air conditioner components belonging to a second group are assigned to the fire panel-side part.

The instrument panel module according the invention is characterized in that the instrument panel-side part can be detached from the fire panel-side part in one direction, that air conditioner components including the air-introducing means, the blowing means, the cooling means, the heating means, and the air-distributing means are classified according to maintainability, and that ones of the air conditioner components belonging to a first group are assigned to the instrument panel-side part, and ones of the air conditioner components belonging to a second group are assigned to the fire panel-side part.

The instrument panel module according the invention is characterized in that the ones of the air conditioner components belonging to the first group include the air-distributing means, that the ones of the air conditioner components belonging to the second group include the cooling means and the heating means, that the air-distributing means comprises mode doors for opening and closing air outlet ports of the casing, and a drive mechanism for driving the mode doors, and that the cooling means and the heating means are both heat exchangers.

The instrument panel module according the invention is characterized in that the ones of the air conditioner components belonging to the first group include the air-distributing means, that the ones of the air conditioner components belonging to the second group include the heating means, that the air-distributing means comprises mode doors for opening and closing air outlet ports of the casing, and a drive mechanism for driving the mode doors, and that the heating means is a heat exchanger.

The instrument panel module according the invention is characterized in that the ones of the air conditioner components belonging to the first group include the heating means and the air-distributing means, that the ones of the air conditioner components belonging to the second group include the cooling means, that the heating means is an electric heater, that the air-distributing means comprises mode doors for opening and closing air outlet ports of the casing, and a drive mechanism for driving the mode doors, and that the cooling means is a heat exchanger.

An automotive air conditioner according to the present invention, including an instrument panel-side casing having at least one of air-introducing means for introducing air, blowing means for blowing the air from the air-introducing means, cooling means for cooling the air introduced by the blowing means from the air-introducing means, heating means for heating the air introduced by the blowing means from the air-introducing means, and air-distributing means for distributing the cooled air or the heated air, is characterized in that the instrument panel-side casing is integrally connectable to an instrument panel, and at the same time connectable to a fire panel-side casing arranged adjacent to a fire panel of a vehicle.

The automotive air conditioner according to the invention is characterized in that the instrument panel-side casing has a connecting surface for connecting the instrument panel-side casing to the fire panel-side casing.

The automotive air conditioner according to the invention is characterized in that the instrument panel-side casing can be attached to the fire panel-side casing from one direction.

The automotive air conditioner according to the invention is characterized in that air conditioner components including the air-introducing means, the blowing means, the cooling means, the heating means, and the air-distributing means are classified according to workability for mounting thereof to a vehicle, and that ones of the air conditioner components belonging to a first group are assigned to the instrument panel-side casing, and ones of the air conditioner components belonging to a second group are assigned to the fire panel-side casing.

The automotive air conditioner according to the invention is characterized in that the instrument panel-side casing can be attached to the fire panel-side casing from one direction, that air conditioner components including the air-introducing means, the blowing means, the cooling means, the heating means, and the air-distributing means are classified according to workability for mounting thereof to a vehicle, and that of the air conditioner components belonging to a first group are assigned to the instrument panel-side casing, and ones of the air conditioner components belonging to a second group are assigned to the fire panel-side casing.

The automotive air conditioner according to the invention is characterized in that the instrument panel-side casing can be detached from the fire panel-side casing in one direction.

The automotive air conditioner according to the invention is characterized in that air conditioner components including the air-introducing means, the blowing means, the cooling means, the heating means, and the air-distributing means are classified according to maintainability, and that ones of the air conditioner components belonging to a first group are assigned to the instrument panel-side casing, and ones of the air conditioner components belonging to a second group are assigned to the fire panel-side casing.

The automotive air conditioner according to the invention is characterized in that the instrument panel-side casing can be detached from the fire panel-side casing in one direction, that air conditioner components including the air-introducing means, the blowing means, the cooling means, the heating means, and the air-distributing means are classified according to maintainability, and that ones of the air conditioner components belonging to a first group are assigned to the instrument panel-side casing, and ones of the air conditioner components belonging to a second group are assigned to the fire panel-side casing.

The automotive air conditioner according to the invention is characterized in that the ones of the air conditioner components belonging to the first group include the air-distributing means, that the ones of the air conditioner components belonging to the second group include the cooling means and the heating means, that the air-distributing means comprises mode doors for opening and closing air outlet ports of the casing, and a drive mechanism for driving the mode doors, and that the cooling means and the heating means are both heat exchangers.

The automotive air conditioner according to the invention is characterized in that the ones of the air conditioner components belonging to the first group include the air-distributing means, that the ones of the air conditioner components belonging to the second group include the heating means, that the air-distributing means comprises mode doors for opening and closing air outlet ports of the casing, and a drive mechanism for driving the mode doors, and that the heating means is a heat exchanger.

The automotive air conditioner according to the invention is characterized in that the ones of the air conditioner components belonging to the first group include the heating means and the air-distributing means, that the ones of the air conditioner components belonging to the second group include the cooling means, that the heating means is an electric heater, that the air-distributing means comprises mode doors for opening and closing air outlet ports of the casing, and a drive mechanism for driving the mode doors, and that the cooling means is a heat exchanger.

An automotive air conditioner according to the present invention, including a fire panel-side casing having at least one of air-introducing means for introducing air, blowing means for blowing the air from the air-introducing means, cooling means for cooling the air introduced by the blowing means from the air-introducing means, heating means for heating the air introduced by the blowing means from the air-introducing means, and air-distributing means for distributing the cooled air or the heated air, is characterized in that the fire panel-side casing is arranged adjacent to a fire panel of a vehicle, and at the same time allows an instrument panel module having an instrument panel and an instrument panel-side casing integrally connected to the instrument panel to be connected to the fire panel-side casing.

The automotive air conditioner according to the invention is characterized in that the fire panel-side casing has a connecting surface for connecting the instrument panel-side casing to the fire panel-side casing.

An automotive air conditioner according to the present invention, including a fire panel-side casing having at least one of air-introducing means for introducing air, blowing means for blowing the air from the air-introducing means, cooling means for cooling the air introduced by the blowing means from the air-introducing means, heating means for heating the air introduced by the blowing means from the air-introducing means, and air-distributing means for distributing the cooled air or the heated air, is characterized in that the fire panel-side casing is arranged adjacent to a fire panel of a vehicle, and at the same time allows an instrument panel-side casing integrally connected to an instrument panel to be connected to the fire panel-side casing, and that when the fire panel-side casing and the instrument panel-side casing are connected to each there, an air passage is formed at a connected portion of the fire panel-side casing and the instrument panel-side casing.

The automotive air conditioner according to the invention is characterized in that the fire panel-side casing has a connecting surface for connecting the instrument panel-side casing to the fire panel-side casing.

The automotive air conditioner according to the invention is characterized in that the fire panel-side casing allows the instrument panel-side casing to be attached thereto from one direction.

The automotive air conditioner according to the invention is characterized in that air conditioner components including the air-introducing means, the blowing means, the cooling means, the heating means, and the air-distributing means are classified according to workability for mounting thereof to a vehicle, and that ones of the air conditioner components belonging to a first group are assigned to the instrument panel-side casing, and ones of the air conditioner components belonging to a second group are assigned to the fire panel-side casing.

The automotive air conditioner according to the invention is characterized in that the fire panel-side casing allows the instrument panel-side casing to be attached thereto from one direction, that air conditioner components including the air-introducing means, the blowing means, the cooling means, the heating means, and the air-distributing means are classified according to workability for mounting thereof to a vehicle, and that ones of the air conditioner components belonging to a first group are assigned to the instrument panel-side casing, and ones of the air conditioner components belonging to a second group are assigned to the fire panel-side casing.

The automotive air conditioner according to the invention is characterized in that the fire panel-side casing allows the instrument panel-side casing to be detached therefrom in one direction.

The automotive air conditioner according to the invention is characterized in that air conditioner components including the air-introducing means, the blowing means, the cooling means, the heating means, and the air-distributing means are classified according to maintainability, and that ones of the air conditioner components belonging to a first group are assigned to the instrument panel-side casing, and ones of the air conditioner components belonging to a second group are assigned to the fire panel-side casing.

The automotive air conditioner according to the invention is characterized in that the fire panel-side casing allows the instrument panel-side casing to be detached therefrom in one direction, that air conditioner components including the air-introducing means, the blowing means, the cooling means, the heating means, and the air-distributing means are classified according to maintainability, and that ones of the air conditioner components belonging to a first group are assigned to the instrument panel-side casing, and ones of the air conditioner components belonging to a second group are assigned to the fire panel-side casing.

The automotive air conditioner according to the invention is characterized in that the ones of the air conditioner components belonging to the first group include the air-distributing means, that the ones of the air conditioner components belonging to the second group include the cooling means and the heating means, that the air-distributing means comprises mode doors for opening and closing air outlet ports of the casing, and a drive mechanism for driving the mode doors, and that the cooling means and the heating means are both heat exchangers.

The automotive air conditioner according to the invention is characterized in that the ones of the air conditioner components belonging to the first group include the air-distributing means, that the ones of the air conditioner components belonging to the second group include the heating means, that the air-distributing means comprises mode doors for opening and closing air outlet ports of the casing, and a drive mechanism for driving the mode doors, and that the heating means is a heat exchanger.

The automotive air conditioner according to the invention is characterized in that the ones of the air conditioner components belonging to the first group include the heating means and the air-distributing means, that the ones of the air conditioner components belonging to the second group include the cooling means, that the heating means is an electric heater, that the air-distributing means comprises mode doors for opening and closing air outlet ports of the casing, and a drive mechanism for driving the mode doors, and that the cooling means is a heat exchanger.

An air conditioning unit for an instrument panel module integrally connected to an instrument panel, according to the present invention, is characterized by comprising a cooling heat exchanger, a heating heat exchanger for heating air having passed through the cooling heat exchanger, an air-mixing door for adjusting a proportion of air having passed the heating heat exchanger and air having not passed the heating heat exchanger, a mode-switching door arranged at a downstream of the air-mixing door, a unit casing accommodating these, a plurality of air outlet ports which are opened and closed by the mode-switching door, and a link mechanism for adjusting a degree of opening of the air-mixing door and a degree of opening of the mode-switching door, and in that the unit casing is separable into an instrument panel-side casing which contains the air-mixing door and the mode-switching door and is directly connected to the instrument panel, and an engine room-side casing which contains the cooling heat exchanger and the heating heat exchanger, and is connected to the instrument panel via the instrument panel-side casing, and that the link mechanism is mounted on an outer wall of the instrument panel-side casing.

An instrument panel module according to the invention is characterized by comprising the air conditioning unit for an instrument panel module, and an instrument panel to which the air conditioning unit for an instrument panel module is integrally connected.

### Brief Description of Drawings

FIG. 1 is a longitudinal cross-sectional view of an instrument panel module according to a first embodiment of the invention in a state mounted to a vehicle;
FIG. 2 is an exploded perspective view of the instrument panel module shown in FIG. 1;
FIG. 3 is a view of an instrument panel-side part of a casing of an automotive air conditioner in a state joined to an instrument panel;
FIG. 4 is a view of a fire panel-side part in a state joined to the instrument panel-side part of the casing of the automotive air conditioner;
FIG. 5 is a view showing the instrument panel module in a state prior to being mounted to the vehicle;
FIG. 6 is a view of the instrument panel-side part in a state separated from the fire panel-side part of the casing of the automotive air conditioner;
FIG. 7 is a view of the instrument panel-side part of the casing of the automotive air conditioner in a state joined to the fire panel-side part;
FIG. 8 shows, in longitudinal cross section, an instrument panel module according to a second embodiment of the invention in a state mounted to a vehicle, in which FIG. 8 (a) is a cross-sectional view of the instrument panel module sectioned at a central portion of the vehicle with respect to a left-right direction, and FIG. 8 (b) is a cross-sectional view of the instrument panel module sectioned in the vicinity of a passenger's side seat;
FIG. 9 shows, in longitudinal cross section, an instrument panel module according to a third embodiment of the invention in a state mounted to a vehicle, in which FIG. 9 (a) is a cross-sectional view of the instrument panel module sectioned at a central portion of the vehicle with respect to a left-right direction, and FIG. 9 (b) is a cross-sectional view of the instrument panel module sectioned in the vicinity of a passenger's side seat;
FIG. 10 provides longitudinal cross-sectional views for explaining a case in which an instrument panel-side part Rp is disassembled from the instrument panel module, in which FIG. 10(a) is a cross-sectional view of the instrument panel module sectioned at a central portion of the vehicle with respect to the left-right direction, and FIG. 10 (b) is a cross-sectional view of the instrument panel module sectioned in the vicinity of the passenger's side seat;
FIG. 11 is a conceptual illustration showing an instrument panel module according to a fourth embodiment of the invention in a separated state;
FIG. 12 is a conceptual illustration showing the instrument panel module in a joined state;
FIG. 13 is a conceptual illustration showing an automotive air conditioner according to a fifth embodiment of the invention;
FIG. 14 is a conceptual illustration showing an automotive air conditioner according to a sixth embodiment of the invention;
FIG. 15 is a conceptual illustration showing an automotive air conditioner according to a seventh embodiment of the invention;
FIG. 16 is a conceptual illustration showing an automotive air conditioner according to an eighth embodiment of the invention;
FIG. 17 is a conceptual illustration showing an automotive air conditioner according to a ninth embodiment of the invention;
FIG. 18 is a longitudinal cross-sectional view showing an instrument panel module incorporating an automotive air conditioner, according to a tenth embodiment of the invention, in a separated state; and
FIG. 19 is a longitudinal cross-sectional view showing the instrument panel module in an assembled state.

### Best Mode of Carrying Out the Invention

The invention will now be described in detail with reference to drawings showing preferred embodiments thereof.

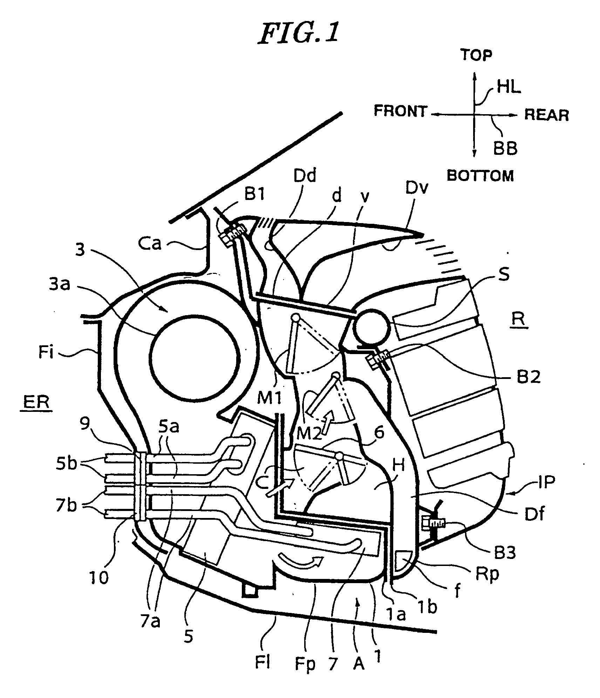

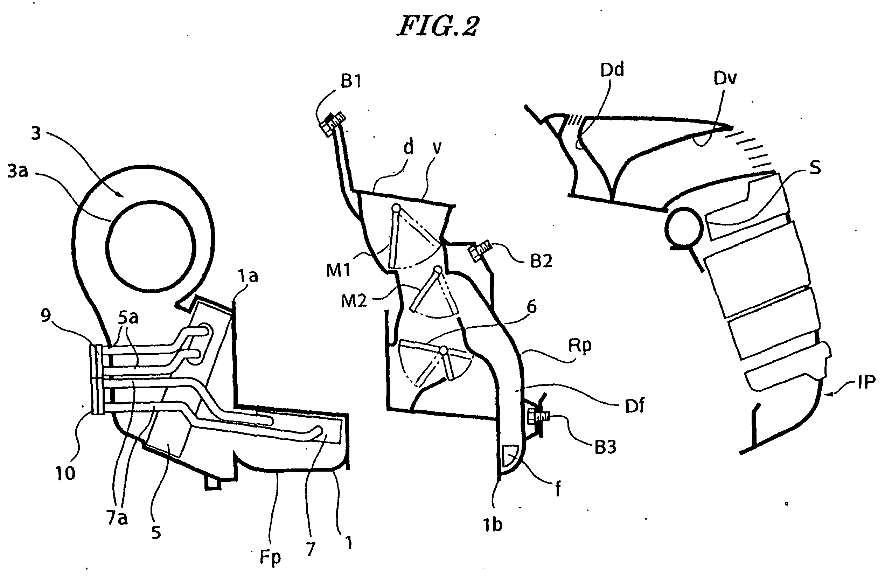

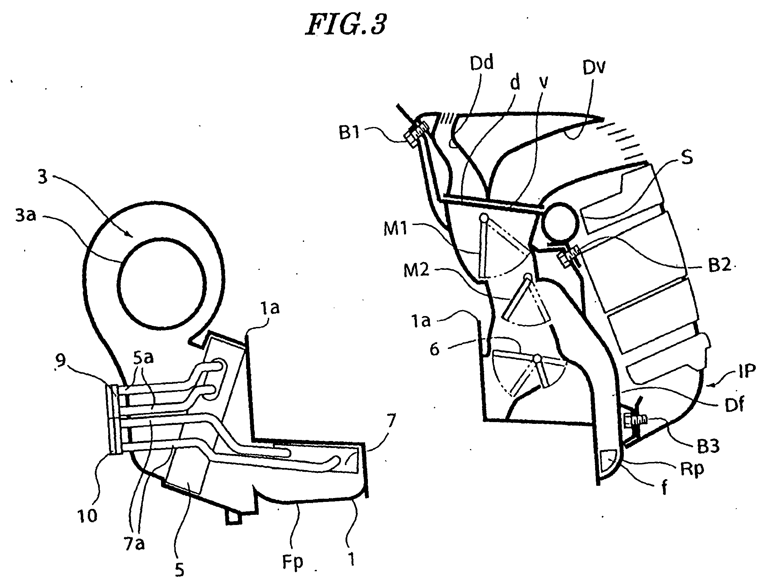

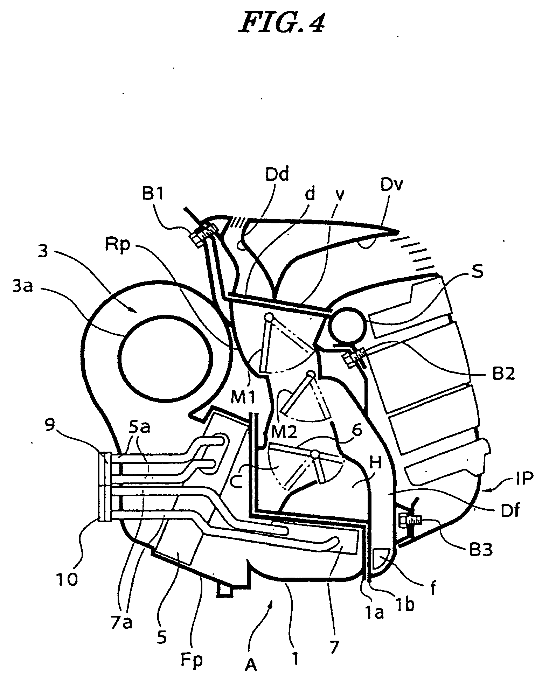

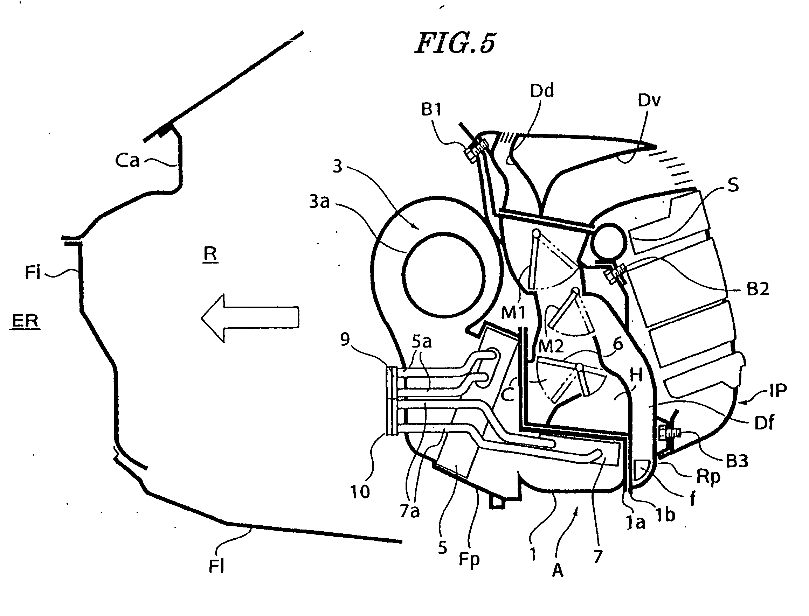

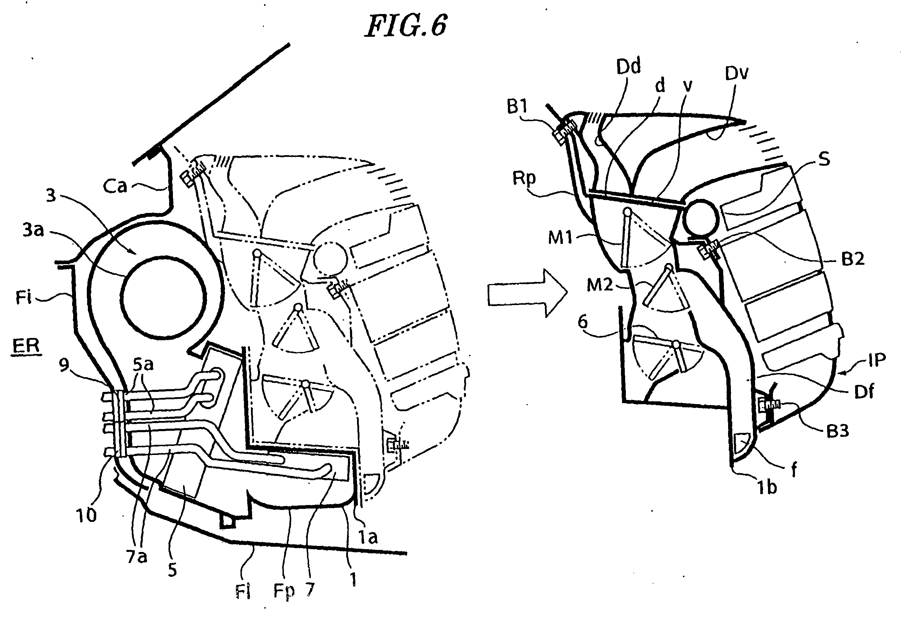

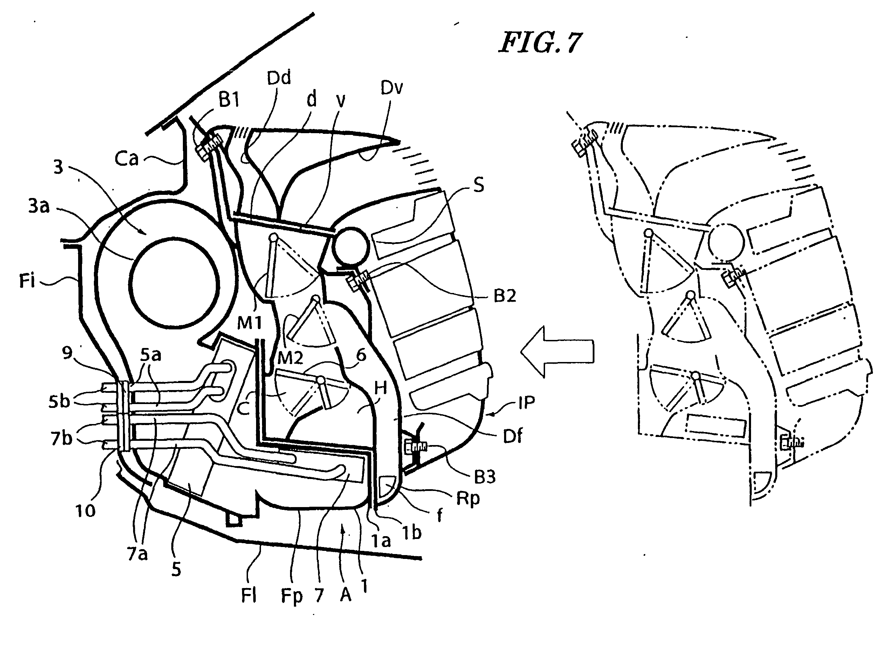

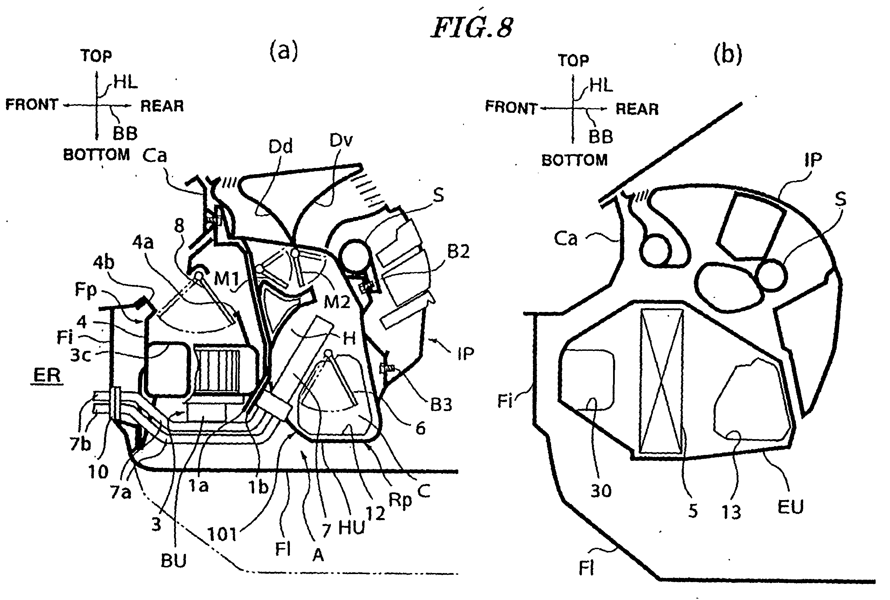

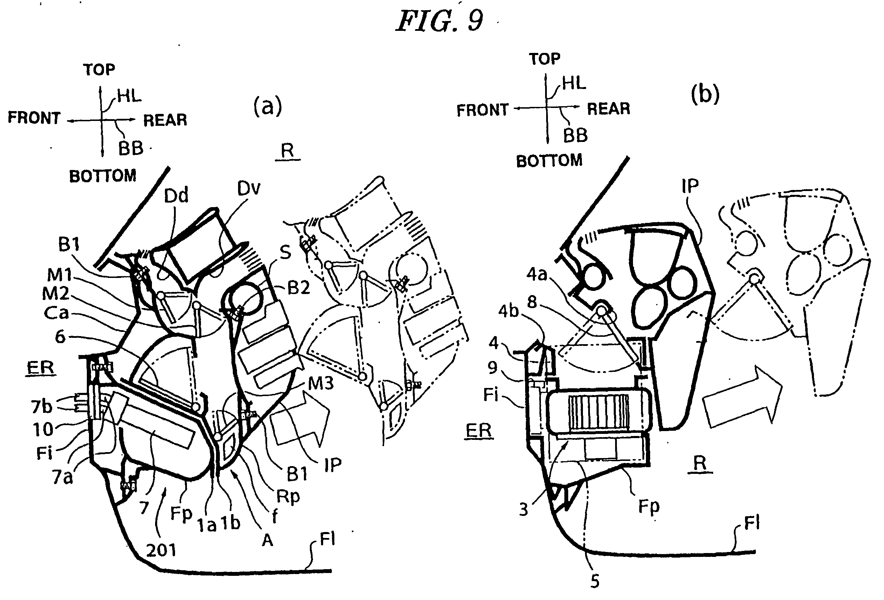

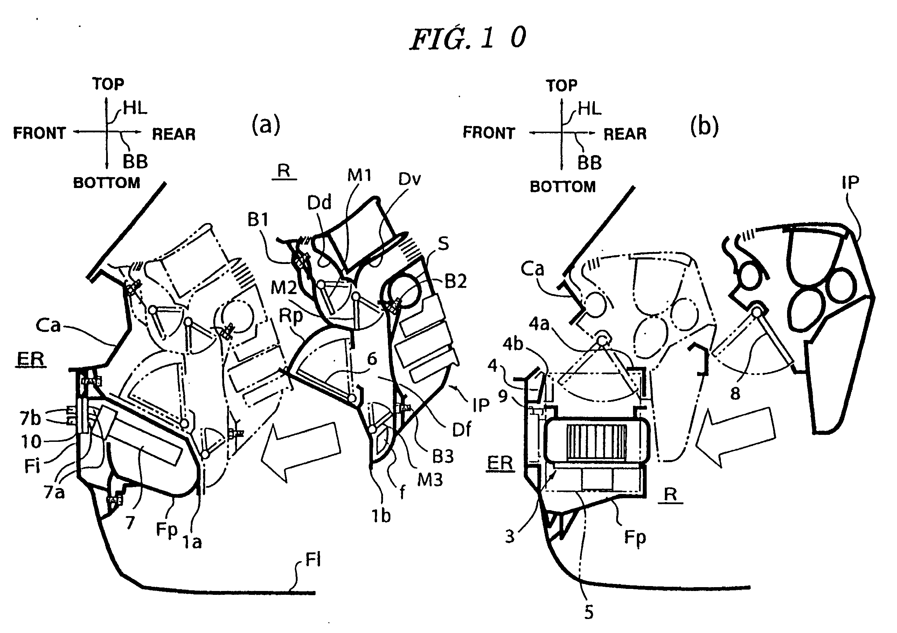

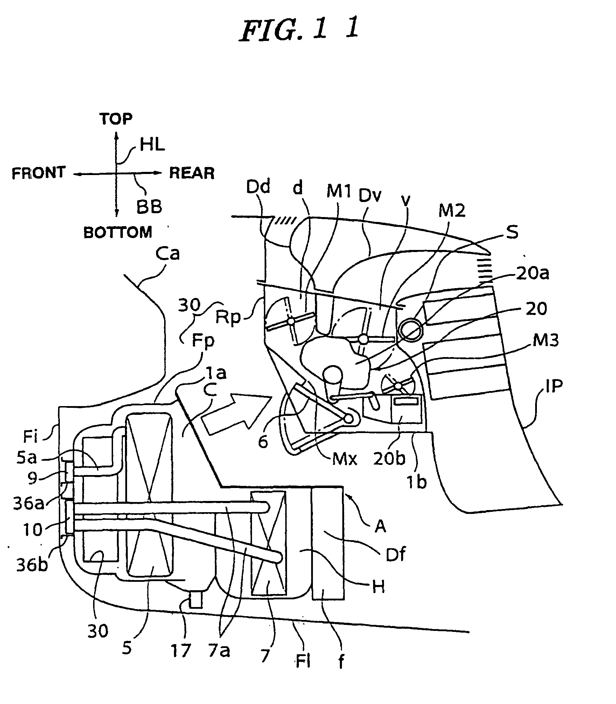

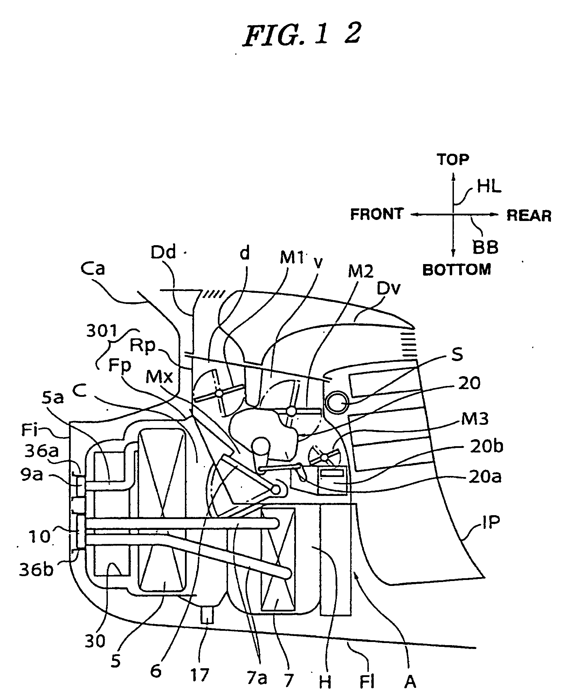

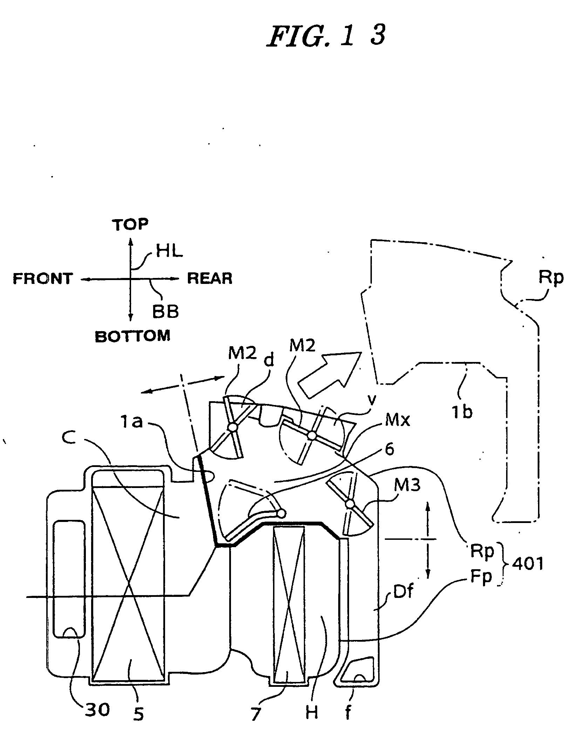

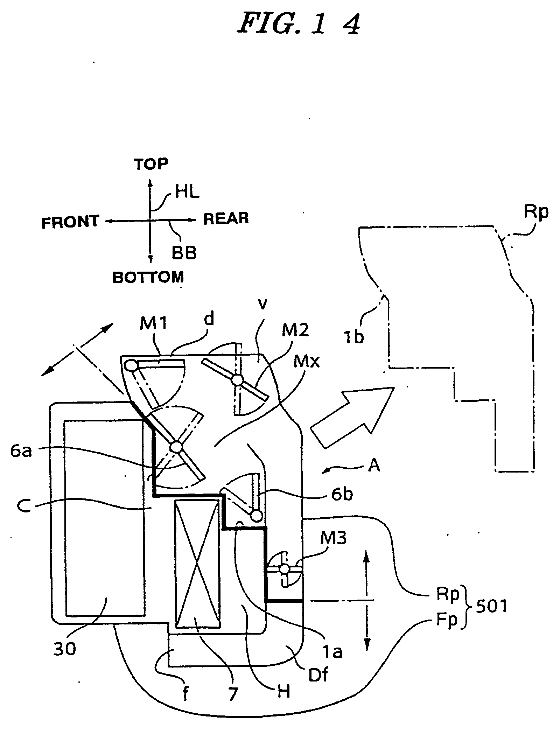

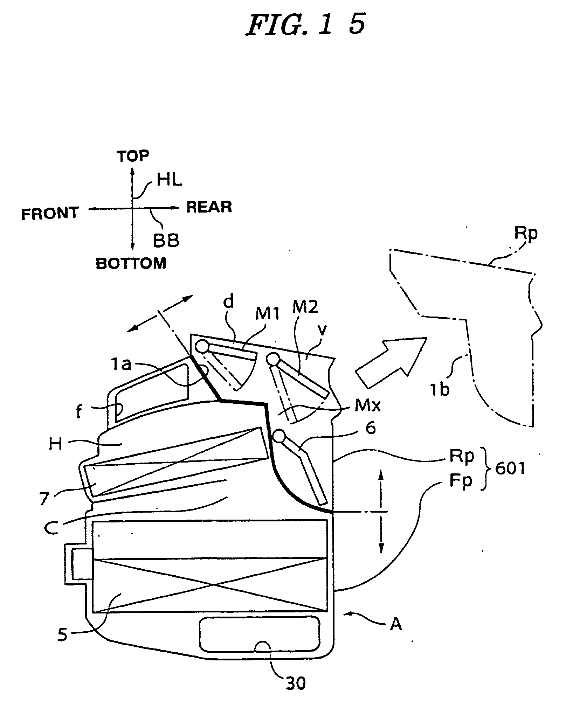

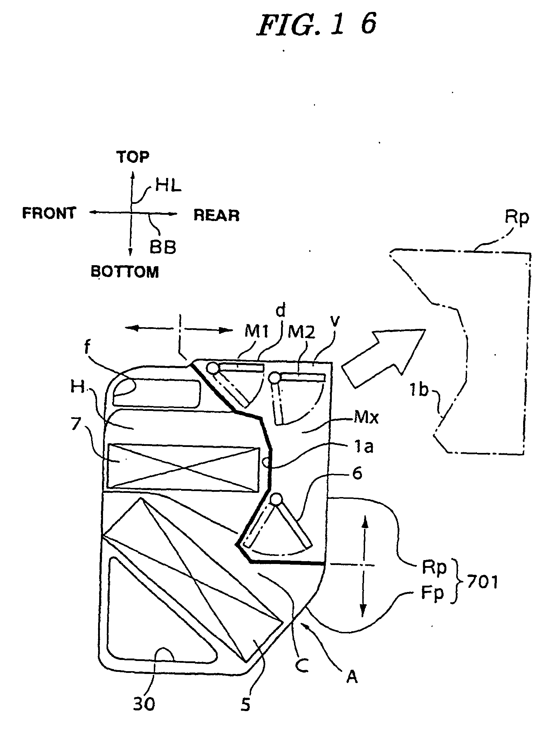

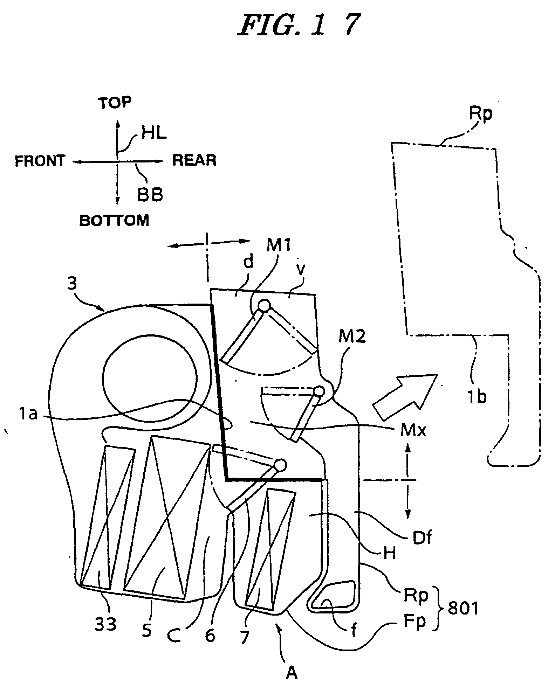

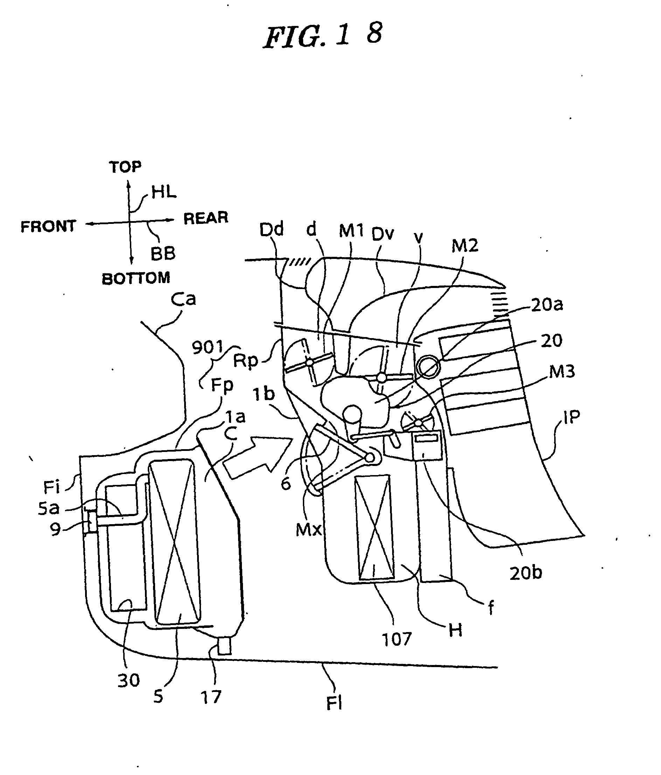

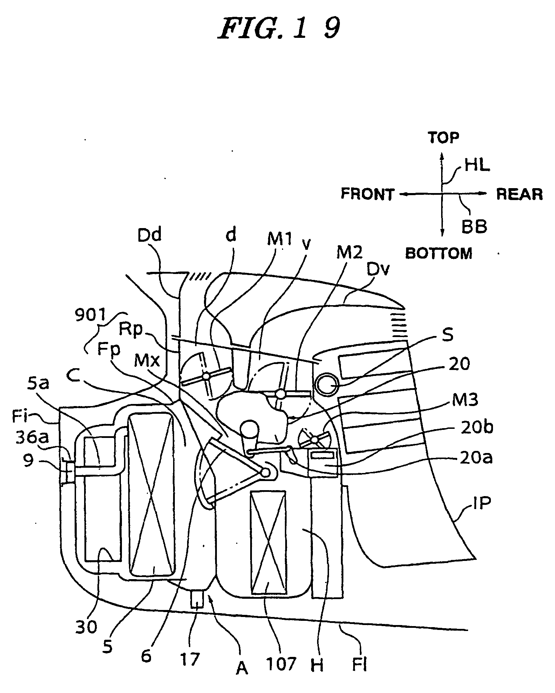

FIG. 1 is a longitudinal cross-sectional view of an instrument panel module according to a first embodiment of the invention in a state in which it is mounted in an automotive vehicle, FIG. 2 is an exploded view of a separated state of the instrument panel module shown in FIG. 1, FIG. 3 is a view of an instrument panel-side part of a casing of an automotive air conditioner in a state joined to an instrument panel, FIG. 4 is a view of a fire panel-side part in a state joined to the instrument panel-side part of the casing of the automotive air conditioner, and FIG. 5 is a view of the instrument panel module in a state prior to being mounted to the vehicle.

A fire panel Fi partitions an engine room ER and a compartment R. The instrument panel module is arranged within the compartment R. The instrument panel module shown in these figures is formed by integrating the automotive air conditioner A with the instrument panel IP.

The instrument panel IP is integrally formed with ducts Dd, Dv. Further, mounted on the instrument panel IP are a control panel, a navigation device, an audio unit, an ash tray, etc, and a steering member S which extends in a left-right direction of the vehicle is supported thereby.

The casing 1 of the automotive air conditioner A can be separated into two parts: fire panel-side part (or fire panel-side casing) Fp and an instrument panel-side part (or instrument panel-side casing) Rp. The instrument panel-side part Rp can be attached to the fire panel-side part Fp from one direction (see FIG. 7), and the instrument panel-side part Rp can be detached from the fire panel-side part Fp in the one direction (see FIG. 6). In this embodiment, it is possible to carry out the mounting and removal substantially along a front-rear direction BB of the vehicle.

A connecting surface 1a of the fire panel-side part Fp and a connecting surface 1b of the instrument panel-side part Rp are firmly connected to each other via a sealing member (not shown), such as urethane resin, by fixing means (not shown), such as screws. In FIG. 1, for explanation purposes, the connecting surface 1a and the connecting surface 1b are shown separate from each other.

The fire panel-side part Fp has a blower (blowing means) 3 and an evaporator (cooling means) 5. The fire panel-side part Fp has an intake box (not shown) connected thereto which forms part of air-introducing means. The intake box is formed with an internal air-introducing port and an external air-introducing port, neither of which is shown, and an internal/external air-switching door is provided within the intake box. The air-introducing means is comprised of the intake box and the internal/external air-switching door.

The blower 3 sends air introduced into the intake box to the evaporator 5. Part of a motor (not shown) for rotating a fan 3a protrudes out of the casing 1.

The evaporator 5 is an heat exchanger for cooling air from the fan 3a.

The instrument panel-side part Rp has an air-mixing door 6, a heater core (heating means) 7, and mode doors M1, M2 (air-separating means). A driving mechanism (not shown) for driving these devices is attached to an outer wall of the instrument panel-side part Rp.

The air-mixing door 6 adjusts the proportion between air passing through the heater core 7 and air not passing through the same.

The heater core 7 is a heat exchanger for heating air from the evaporator 5.

The instrument panel-side part Rp is provided with a defroster outlet d, a vent outlet v, and a foot outlet f.

The defroster outlet d and the vent outlet v are located in an upper part of the instrument panel-side part Rp, and the foot outlet f is located in a lower part of the instrument panel-side part Rp, whereby the air is distributed into the cabin space of the compartment R from the respective outlets d, v, f via the ducts Dd, Dv, and a duct Df. The outlets d, v, f are opened and closed by the mode doors M1, M2.

In this first embodiment, air conditioner components, such as the evaporator 5, the air-mixing door 6, the heater core 7 and the mode doors M1, M2, are classified (into groups) by paying attention to maintainability (ease of maintenance) or workability of mounting to the vehicle (ease of mounting to the vehicle), whereby the evaporator 5 and the heater core 7 belonging to piping-related air conditioner components (first group) are assigned to the fire panel-side part Fp, while the air-mixing door 6, and the mode doors M1, M2 belonging to mechanism-related air conditioner components (second group) are assigned to the instrument panel-side part Rp.

It should be noted that the fire panel-side part Fp and the instrument panel-side part Rp can be separated in the left-right direction of the vehicle, and the left and right casing component parts constituting the fire panel-side part Fp and the instrument panel-side part Rp are fixed in the left-right direction by fixing means (not shown) such as tapping screws. This feature of the construction also applies to the other embodiments of the invention including a second embodiment.

Further, upper, intermediate and lower parts of the instrument panel-side part Rp are integrally connected to the instrument panel IP by bolts B1, B2, B3. The upper part of the instrument panel IP is fixed to a cowl Ca by bolts, not shown, and the upper part of the same is fixed to the floor panel F1 by bolts, not shown.

Next, the assembling of the instrument panel module and attaching (mounting) of the same to the vehicle will be described.

The instrument panel module has three parts thereof separated before assembly (see FIG. 2).

First, the instrument panel-side part Rp and the instrument panel IP are connected to each other (see FIG. 3).

Then, the fire panel-side part Fp and the instrument panel-side part Rp are connected to each other. At this time, the connecting surface 1a of the fire panel-side part Fp and the connecting surface 1b of the instrument panel-side part Rp are abutted with each other via a sealing member, and the connecting surfaces 1a, 1b are joined by fixing means, not shown, (see FIG. 4).

By the above procedure, the instrument panel IP, the instrument panel-side part Rp and the fire panel-side part Fp are integrated with each other to complete one instrument panel module.

Thereafter, the instrument panel module is mounted on the vehicle in a state shown in FIG. 4 on a vehicle production line. At this time, the fire panel-side part Fp is fixed to the fire panel Fi by bolts, not shown, and a connector 9 of the refrigerant pipe 5a of the evaporator 5 is fixed to the fire panel Fi. The refrigerant panel 5a is connected to the refrigerant pipe 5b of the engine room ER. Further, the upper part of the instrument panel IP is fixed to the cowl Ca by bolts, not shown, and the lower part of the same is connected to the floor panel F1 by bolts, not shown.

FIG. 6 is a view of the instrument panel-side part in a state separated from the fire panel-side part of the casing of the automotive air conditioner.

In the first embodiment, the air-mixing door 6 and the mode doors M1, M2 are assigned to the instrument panel-side part Rp, and the evaporator 5 and the heater core 7 are assigned to the fire panel-side part Fp. This makes it only necessary, when the maintenance of the air-mixing door 6 and the mode doors M1, M2 is carried out, that only the instrument panel-side part Rp is removed, leaving the fire panel-side part Fp (see FIG. 6). Therefore, it is not necessary to separate the refrigerant pipe 5a of the compartment R and the refrigerant pip 5b of the engine room ER from each other, separate a hot water pipe 7a of the compartment R and a hot water pipe 7b of the compartment ER from each other, or remove electric chords (not shown) of the blower 3. Therefore, it is not required to drain engine coolant.

The assembly of the instrument panel module and mounting of the same to the vehicle can be carried out by other methods than the above.

Although in the above-described method, the instrument panel module, which has been formed by integrating the instrument panel IP, the instrument panel-side part Rp and the fire panel-side part Fp with each other, is conveyed into the vehicle production line, this is not limitative, but there may employed another method in which the instrument panel module is conveyed into the vehicle production line, with only the instrument panel IP and the instrument panel-side part Rp being integrated with each other, and the fire panel-side part Fp being not joined to the instrument panel IP.

In this case, the mounting of the instrument panel module to the vehicle is carried out in the following manner:

First, the fire panel-side part Fp is mounted on the vehicle. At this time, the fire panel-side part Fp is fixed to the fire panel Fi by bolts, and the connector 9 of the refrigerant pipe 5a of the evaporator is fixed to the fire panel Fi. The refrigerant pipe 5a is connected to the refrigerant pipe 5b of the engine room ER.

Then, as shown in FIG. 7, the instrument panel-side part Rp integrated with the instrument panel IP is joined to the fire panel-side part Fp, while the upper part of the instrument panel IP is screwed to the cowl Ca, and the lower part of the same is screwed to the floor panel F1.

According to this procedure of assembly, the assembly work on the vehicle production line is further facilitated, and the labor of the work is reduced. In particular, this method is more effective when applied to an automotive air conditioner comprised of a larger number of air conditioner components, such as the evaporator 5, accommodated within the casing 1.

Next, the operation of the instrument panel module described above will be described.

When the air-mixing door 6 and the mode doors M1, M2 are in position indicated by solid lines, as shown in FIG. 1, a cold air bypass passage C is blocked, and all the air having passed through the evaporator 5 flows toward the heater core 7. The air is heated when passing through the heater core 7, and flows from a hot air passage H through a duct Df to the foot outlet f, from which it is blown into the cabin of the compartment R.

When the air-mixing door 6 and the mode door M2 are in position indicated by phantom lines in FIG. 1, and the mode door M1 is in position indicated by solid lines, the air having passed through the evaporator 5 does not pass through the heater core 7 but pass through the cold air bypass passage C to the vent outlet V, from which the air flows through the duct Dv and is blown into the cabin space of the compartment R.

According to this first embodiment, since the casing 1 is configured such that it is separable into the fire panel-side part Fp and the instrument panel-side part Rp, the mounting of the instrument panel module to the vehicle is facilitated and at the same time, the whole automotive air conditioner is not required to be separated from the vehicle when the maintenance is carried out, whereby the working hours and manufacturing costs can be reduced (effects (1)).

Further, since the instrument panel-side part Rp can be removed from the fire panel-side part Fp in one direction, whereby the maintainability is improved (effects (2)).

Moreover, since the instrument panel-side part Rp can be mounted to the fire panel-side part Fp from the one direction, the mounting workability is further improved, and the connecting surfaces 1a, 1b of the fire panel-side part Fp and the instrument panel-side part Rp are difficult to be displaced from each other, whereby the sealing properties are improved (effects (3)).

Further, the air conditioner components including the evaporator 5, the heater core 7, and the mode doors M1, M2, are classified by paying attention to maintainability or mounting workability, into a piping-related group, and a mechanism-related group, and air conditioner components belonging to the piping-related group are assigned to the fire panel-side part Fp, while air conditioner components belonging to the mechanism-related group are assigned to the instrument panel-side part Rp. This facilitates the work of mounting the instrument panel module to the vehicle, and at the same time, makes it unnecessary to remove the whole automotive air conditioner from the vehicle when the maintenance is carried out, whereby the working hours and manufacturing costs can be reduced. Except when the maintenance of the evaporator 3 and the heater core 7 are subjected to maintenance, there is no longer the waste of the refrigerant and the coolant due to drainage thereof carried out whenever the instrument panel IP is removed, which meets the requirement of saving of resources (effects (4)).

Although in the first embodiment, the air conditioner components are classified by paying attention to the maintainability and the mounting workability, this is not limitative, but in other embodiments, they may be classified by paying only of the maintainability and the mounting workability, or may be classified from other points of view.

FIG. 8 shows, in longitudinal cross section, an instrument panel module according to a second embodiment of the invention in a state mounted to a vehicle, in which FIG. 8 (a) is a cross-sectional view of the instrument panel module sectioned at a central portion of the vehicle with respect to a left-right direction, and FIG. 8 (b) is a cross-sectional view of the instrument panel module sectioned in the vicinity of a passenger's side seat. The component parts common to those in the first embodiment are designated by identical reference numerals and description thereof is omitted.

Differently from the automotive air conditioner A of the first embodiment in which the evaporator 5 and the heater core 7 are arranged along the front-rear direction BB of the vehicle, in the automotive air conditioner A of this second embodiment, the evaporator 5 and the heater core 7 are arranged in the left-right direction of the vehicle in a side-by-side fashion.

A casing 101 of the automotive air conditioner A is separable into the two parts of a fire panel-side part Fp and an instrument panel-side part Rp, and it is possible to attach the instrument panel-side part Rp to the fire panel-side part Fp from one direction, and also detach the instrument panel-side part Rp from the fire panel-side part Fp in the one direction.

The fire panel-side part Fp has the intake box 4, the blower 3, and the evaporator 5. The intake box 4 is formed with an internal air-introducing port 4a and an external air-introducing port 4b, and within the intake box 4, there is arranged an internal/external air-switching door 8. Air-introducing means is comprised of the intake box 4 and the internal/external air-switching door 8.

The instrument panel-side part Rp has the evaporator 5, the air-mixing door 6, the heater core 7, and the mode doors M1, M2. The instrument panel-side part Rp is formed by a heater unit HU accommodating the heater core 7. The fire panel-side part Fp is formed by a blower unit Bu and an evaporator unit EU accommodating the evaporator 5. A connecting port 12 of the heater unit HU and a connecting port 13 of the evaporator unit Eu are communicated with each other via a duct, not shown. The evaporator unit EU has a blower-connecting port 30 thereof connected to an outlet port 3c of the blower 3.

This second embodiment can provide the effects (1), (2), and (3) described above.

It should be noted that if the heating means is implemented not by a heat exchanger but by an electric heater, the same advantageous effects as provided by a tenth embodiment of the invention, described hereinafter, can be obtained.

FIG. 9 shows, in longitudinal cross section, an instrument panel module according to a third embodiment of the invention in a state mounted to a vehicle, in which FIG. 9 (a) is a cross-sectional view of the instrument panel module sectioned at a central portion of the vehicle with respect to a left-right direction, and FIG. 9 (b) is a cross-sectional view of the instrument panel module sectioned in the vicinity of a passenger's side seat. FIG. 10 provides longitudinal cross-sectional views showing an instrument panel-side part Rp in a state disassembled from the instrument panel module, in which FIG. 10(a) is a cross-sectional view of the instrument panel module sectioned at a central portion of the vehicle with respect to the left-right direction, and FIG. 10 (b) is a cross-sectional view of the instrument panel module sectioned in the vicinity of the passenger's side seat. The component parts common to those of the first embodiment are designated by identical reference numerals and detailed description thereof will be omitted.

In the automotive air conditioner A of the third embodiment, the heater core 7 is arranged in a central portion thereof with respect to the left-right direction of the vehicle, and the evaporator 5 and the blower 3 are arranged on a left side (passenger's seat side) of the heater core 7 with respect to the left-right direction of the vehicle. The evaporator 5 is located between the heater core 7 and the blower 3.

A casing 201 of the automotive air conditioner A is separable into a fire panel-side part Fp and an instrument panel-side part Rp, and it is possible to attach the instrument panel-side part Rp to the fire panel-side part Fp from one direction (see FIG. 10), and also detach the instrument panel-side part Rp from the fire panel-side part Fp in the one direction (see FIG. 9).

The fire panel-side part Fp has the intake box 4, the blower 3, and the evaporator 5. The intake box 4 is formed with the internal air-introducing port 4a and the external air-introducing port 4b, and within the intake box 4, there is arranged the internal/external air-switching door 8.

The instrument panel-side part Rp has the air-mixing door 6, the mode doors M1, M2, etc.

This third embodiment can provide the same advantageous effects as provided by the first embodiment.

FIG. 11 is a conceptual illustration showing an instrument panel module according to a fourth embodiment of the invention in a separated state, and FIG. 12 is a conceptual illustration showing the instrument panel module in a joined state.

The automotive air conditioner A of this instrument panel module includes the intake box (not shown) for introducing air, the blower (not shown) for blowing air introduced into the intake box, the evaporator 5 for cooling the air introduced by the blower from the intake box, the heater core 7 for heating the air introduced by the blower from the intake box, the air-mixing door 6 for adjusting the proportion between air passing through the heater core and air not passing through the same, mode doors M1, M2, M3 for distributing the cooled or heated air, and a casing 301 accommodating these devices.

The casing 301 has a blower-connecting port 30 thereof connected to the outlet port of the blower.

The evaporator 5 and the heater core 7 are arranged substantially vertically. The evaporator 5 is located on a front side of the heater core 7 with respect to the front-rear direction BB of the vehicle.

The evaporator 5 has the refrigerant pipe 5a connected thereto, and the heater core 7 has the hot water pipe 7a connected thereto. The refrigerant pipe 5a and the hot water pipe 7a are connected to a refrigerant pipe and a hot water pipe, neither of which is shown, of an engine room, on a vehicle production line.

The casing 301 defines therein the cold air bypass passage C where the air having passed the evaporator 5 flows, the hot air passage H where the air having passed through the heater core 7 flows, and an air-mixing space MX where the air flowing from the cold air bypass passage C and the air flowing from the hot air passage H are mixed.

The air-mixing space MX is located downstream of the air-mixing door 6. The air-mixing door 6 is driven by a drive mechanism, not shown. The casing 301 is formed with the defroster outlet d, the vent outlet v, and the foot outlet f, at respective locations downstream of the air-mixing space MX. The defroster outlet d has the duct Dd connected thereto, and the vent outlet v has the duct Dv connected thereto. At respective locations upstream of the defroster outlet d, the vent outlet v, and the foot outlet f, there are arranged the mode doors M1, M2, M3 (e.g. formed by butterfly doors) in a rotatable fashion. The mode doors M1, M2, M3 are operated by the drive mechanism 20 to set a blowing mode.

The drive mechanism 20 is comprised of a lever 20a for transmitting driving forces to the mode doors M1, M2, M3, and an actuator 20b for driving the lever 20a.

The driving mechanism 20 is arranged on the outer wall of the casing 301. Further, the bottom of the casing 301 is formed with a drainage port 17 for draining therefrom condensed water flowing down from the evaporator 7 out of the casing. The drainage port 17 is located inward of the floor panel F1 as shown in FIG. 11. This makes it easy to mount the instrument panel module to the vehicle.

The casing 301 is formed by synthetic resin, such as polypropylene. The casing 301 is separable into the two parts of a fire panel-side part Fp having the evaporator 5 and the heater core 7, and an instrument panel-side part Rp having the air-mixing door 6 and the mode doors M1, M2, M3. The drive mechanism 20 and harness devices, not shown, are arranged in the instrument panel-side part Rp.

The connecting surfaces 1a, 1b of both the parts Fp, Rp are firmly connected to each other via an air seal (e.g. urethane seal), not shown, by fixing means, not shown, such as screws and C-shaped clips, whereby the casing 301 is completed. Further, each of the parts Fp, Rp is separable into respective parts in the left-right direction of the vehicle. The separate right and left haves of each of the parts Fp, Rp are joined to each other by the fixing means, such as screws and C-shaped clips, whereby the fire panel-side part Fp and the instrument panel-side part Rp are completed.

Next, the operations and effects of this instrument panel module will be described.

When the fan of the blower is rotated, the air is introduced into the casing 301 from the blower-connecting port 30. The air introduced into the casing 301 flows toward the evaporator 5.

In the air-mixing mode, the air-mixing door 6 is in an intermediate position between the fully-opened position and the fully-closed position, whereby part of the air having passed through the evaporator 5 flows through the cold air bypass passage C toward the air-mixing space MX, and the remainder of the air flows toward the heater core 7. The air is cooled when passing through the evaporator 5.

The air having passed through the heater core 7 flows through the hot air passage H toward the air-mixing space MX. The air is heated when passing through the heater core 7.

The air downstream of the cold air bypass passage C and the air downstream of the hot air passage H flow into each other in the air-mixing space MX, and mixed with each other, and the resulting mixture flows to one(s) of the outlets d, v, f associated with a selected one of the blowing modes.

Next, description will be given of a manner of removing the instrument panel IP to carry out maintenance after the vehicle having this instrument panel module mounted thereon is supplied to market.

To remove the instrument panel IP, the fixing means are removed so as to enable the casing 301 to be separated from each other into the fire panel-side part Fp and the instrument panel-side part Rp.

Next, the instrument panel IP is pulled backward in the front-rear direction BB of the vehicle (see FIG. 11). When the instrument panel 1 is pulled, the instrument panel-side part Rp is moved together with the instrument panel IP. At this time, the fire panel-side part Fp accommodating the evaporator 5 and the heater core 7 remains in the original position.

Thereafter, the maintenance or replacement of object components is carried out.

Finally, the instrument panel-side part Rp integrated with the instrument panel IP is joined to the fire panel-side part Fp by the fixing means.

According to the fourth embodiment, not only the same effects as obtained by the first embodiment can be obtained, but also the following advantageous effects can be obtained.

Since skirt portions 36a, 36b accommodating the connector 9 of the hot water pipe 7a and a connector 10 of the refrigerant pipe 5a are integrally formed with a front portion of the fire panel-side part Fp with respect to the front-rear direction BB of the vehicle, the work for mounting and removing pipes is facilitated.

FIG. 13 is a conceptual illustration of an automotive air conditioner according to a fifth embodiment. Component parts common to those of the first embodiment are designated by identical reference numerals, and description thereof is omitted. Further, in this diagram, the illustration of the instrument panel IP, the refrigerant pipe 5a, the hot water pipe 7a, and the drive mechanism 20 is omitted. In the figure, the thick solid line designates a boundary for separation between a fire panel-side part Fp and a instrument panel-side part Rp.

In this embodiment, a casing 401 is separable into the two parts of the fire panel-side part Fp having the evaporator 3 and the heater core 7 and the instrument panel-side part Rp having the air-mixing door 6, the mode doors M1, M2, M3, etc. The two parts Fp, Rp are joined to each other by fixing means, such as screws or clips, not shown, whereby the casing 401 is completed.

The evaporator 3 and the heater core 7 are arranged along the front-rear direction BB of the vehicle, and the air flowing into the casing 401 proceeds from a rear side to a front side in the front-rear direction BB of the vehicle.

The air-mixing door 6 is bent, and operated by the drive mechanism to have its opening determined.

The instrument panel-side part Rp has the foot duct Df integrally formed therewith at a location downstream of the mode door M3.

The mode doors M1, M2, M3 are operated by the drive mechanism to set a blowing mode. The drive mechanism is arranged on an outer wall of the instrument panel-side part Rp.

In maintenance, when the instrument panel IP is pulled backward in the front-rear direction BB of the vehicle after removing the fixing means, the instrument panel-side part Rp is detached from the fire panel-side part Fp in one direction (see FIG. 13).

According to the fifth embodiment, the same advantageous effects as provided by the first embodiment can be obtained.

FIG. 14 is a conceptual illustration showing an automotive air conditioner according to a sixth embodiment of the invention. Component parts common to those of the first embodiment are designated by identical reference numerals, and description thereof is omitted. Further, in this diagram, the illustration of the instrument panel IP, the refrigerant pipe 5a, the hot water pipe 7a, and the drive mechanism 20 is omitted. In the figure, the thick solid line designates a boundary for separation between the fire panel-side part Fp and the instrument panel-side part Rp.

In this embodiment, a casing 501 is separable into the two parts of a fire panel-side part Fp having the heater core 7 and an instrument panel-side part Rp having a main air-mixing door 207, a sub air-mixing door 231, the mode doors M1, M2, M3, etc. The two parts Fp, Rp are joined to each other by fixing means, such as screws or clips, not shown, whereby the casing 501 is completed.

The air flowing from the floor connection port 30 into the casing 501 flows from the front side to the rear side in the front-rear direction BB.

The main air-mixing door 6a is a butterfly door. The sub mixing door 6b and the mode door M1 are ordinary doors commonly used for opening and closing purposes.

The mode doors M1, M2, M3 and the air-mixing doors 6a, 6b are operated by the drive mechanism whereby the degree of opening of each door and a blowing mode are set. The drive mechanism is arranged on an outer wall of the instrument panel-side part Rp of the casing 501.

In maintenance, when the instrument panel IP is pulled backward in the front-rear direction BB of the vehicle after removing the fixing means, the instrument panel-side part Rp is detached from the fire panel-side part Fp in one direction (see FIG. 14).

According to the sixth embodiment, the same advantageous effects as provided by the first embodiment can be obtained.

FIG. 15 is a conceptual illustration showing an automotive air conditioner according to a seventh embodiment of the invention. Component parts common to those of the first embodiment are designated by identical reference numerals, and description thereof is omitted. Further, in this diagram, the illustration of the instrument panel IP, the refrigerant pipe 5a, the hot water pipe 7a, and the drive mechanism 20 is omitted. In the figure, the thick solid line designates a boundary for separation between the fire panel-side part Fp and the instrument panel-side part Rp.

In this embodiment, a casing 601 is separable into the two parts of a fire panel-side part Fp having the evaporator 3, the heater core 7, etc., and an instrument panel-side part Rp having the air-mixing door 6, the mode doors M1, M2, etc. The two parts Fp, Rp are joined to each other by fixing means, such as screws or clips, not shown, whereby the casing 601 is completed.

The heater core 7 is located upward of the evaporator 3 in the top-bottom direction HL of the vehicle, and the air introduced into the casing 601 flows from a bottom side to a top side in the top-bottom direction of the vehicle.

The mode doors M1, M2 are ordinary doors commonly used for opening and closing purposes.

The mode doors M1, M2, and the air-mixing door 6 are operated by the drive mechanism whereby the degree of opening of each door and a blowing mode are set. The drive mechanism is arranged on an outer wall of the instrument panel-side part Rp of the casing 601. The defroster outlet d, the vent outlet v and the foot outlet f are opened and closed by the mode doors M1, M2.

In maintenance, when the instrument panel IP is pulled backward in the front-rear direction BB of the vehicle after removing the fixing means, the instrument panel-side part Rp is detached from the fire panel-side part Fp in one direction (see FIG. 15).

According to the seventh embodiment, the same advantageous effects as provided by the first. embodiment can be obtained.

FIG. 16 is a conceptual illustration showing an automotive air conditioner according to an eighth embodiment of the invention. Component parts common to those of the first embodiment are designated by identical reference numerals, and description thereof is omitted. Further, in this diagram, the illustration of the instrument panel IP, the refrigerant pipe 5a, the hot water pipe 7a and the drive mechanism 20 is omitted. In the figure, the thick solid line designates a boundary for separation between a fire panel-side part Fp and an instrument panel-side part Rp.

In this embodiment, a casing 701 is separable into the two parts of the fire panel-side part Fp having the evaporator 3, the heater core 7, etc., and the instrument panel-side part Rp having the air-mixing door 6, the mode doors M1, M2, etc. The two parts Fp, Rp are joined to each other by fixing means, such as screws or clips, not shown, whereby the casing 701 is completed.

Similarly to the seventh embodiment, the heater core 7 is arranged at a location upward of the evaporator 3 with respect to the top-bottom direction HL of the vehicle, and the air introduced into the casing 701 from the blower-connecting port 30 flows from a bottom side to a top side in the top-bottom direction of the vehicle.

The mode doors M1, M2, and the air-mixing door 6 are operated by the drive mechanism whereby the degree of opening of each door and a blowing mode are set. The drive mechanism is arranged on an outer wall of the instrument panel-side part Rp of the casing 701. The defroster outlet d, the vent outlet v, and the foot outlet f are opened and closed by the mode doors M1, M2.

In maintenance, when the instrument panel IP is pulled backward in the front-rear direction BB of the vehicle after removing the fixing means, the instrument panel-side part Rp is detached from the fire panel-side part Fp in one direction (see FIG. 16).

According to the eighth embodiment, the same advantageous effects as provided by the first embodiment can be obtained.

FIG. 17 is a conceptual illustration showing an automotive air conditioner according to a ninth embodiment of the invention. Component parts common to those of the first embodiment are designated by identical reference numerals, and description thereof is omitted. Further, in this diagram, the illustration of the instrument panel IP, the refrigerant pipe 5a, the hot water pipe 7a, and the drive mechanism 20 is omitted. In the figure, the thick solid line designates a boundary for separation between a fire panel-side part Fp and an instrument panel-side part Rp.

The automotive air conditioner A shown in the figure is a so-called blower-integrated type air conditioning unit.

This automotive air conditioner A is comprised of the blower, the evaporator 5, the heater core 7, the air-mixing door 6, the mode doors M1, M2, and a casing 801 accommodating these devices.

At a location upstream of the evaporator 5, there is arranged a filter 33 for filtering off the dust contained in the air suctioned into the casing 801 by the blower 3.

The blower 3 is located upward of the evaporator 5 in the top-bottom direction HL of the vehicle, and the evaporator 5 is located forward of the heater core 7 in the front-rear direction of the vehicle.

In this embodiment, the casing 801 is separable into the two parts of a fire panel-side part Fp having the evaporator 5, the heater core 7, etc., and an instrument panel-side part Rp having the air-mixing door 6, the mode doors M1, M2, etc. The connecting surfaces 1a, 1b of the two parts Fp, Rp are firmly connected to each other via an air seal, not shown, by fixing means, such as screws or clips, not shown, whereby the casing 801 is completed.

The drive mechanism for driving the mode doors M1, M2, and the air-mixing door 6 is arranged on an outer wall of the instrument panel-side part Rp of the casing 801. The defroster outlet d, the vent outlet v and the foot outlet f are opened and closed by the two mode doors M1, M2.

In maintenance, when the instrument panel IP is pulled backward in the front-rear direction BB of the vehicle after removing the fixing means, the instrument panel-side part Rp is detached from the fire panel-side part Fp in one direction.

In the floor-integrated type air conditioning unit, the intake box (not shown) is located adjacent to the casing 801, a drive mechanism for an internal/external air door (not shown) may be mounted to the instrument panel-side part.

According to the ninth embodiment, the same advantageous effects as provided by the first embodiment can be obtained.

FIG. 18 is a longitudinal cross-sectional view showing an instrument panel module incorporating an automotive air conditioner, according to a tenth embodiment of the invention, in a separated state, and FIG. 19 is a longitudinal cross-sectional view showing the instrument panel module in an assembled state. Component parts common to those of the first embodiment are designated by identical reference numerals, and description thereof is omitted.

In the first embodiment, description is given of a case in which as means for heating the air from the evaporator 5, a heating heat exchanger (heater core 7) using engine coolant as thermal medium is employed, and this heater core is incorporated within the fire panel-side part Fp. However, in this tenth embodiment, as the heating means, an electric heater 107 for heating the air by heat obtained from electric energy is employed, and this electric heater 107 is incorporated within a fire panel-side part Fp.

Since the electric heater 107 does not necessitate any hot water pipe, such a pipe is not required to be incorporated within the fire panel-side part Fp.

In this tenth embodiment, as shown in FIGS. 18 and 19, a casing 901 is separable into the two parts of the fire panel-side part Fp having the evaporator 3, etc., and an instrument panel-side part Rp having the electric heater 107, the air-mixing door 6, the mode doors M1, M2, etc. The two parts Fp, Rp are joined by fixing means, such as screws or clips, not shown, whereby the casing 901 is completed.

According to the tenth embodiment, not only the same advantageous effects as provided by the first embodiment can be obtained, but also the following advantageous effects can be obtained.

Since the electric heater 107 is incorporated within the instrument panel-side part Rp, the operations of connecting harness devices (not shown) can be intensively carried out together with operations of connecting other electrical equipment devices (e.g. actuator 20b of the drive mechanism) before joining the instrument panel-side part Rp to the fire panel-side part Fp. Therefore, it is no longer necessary to carry out the operations of connecting harness devices after joining the instrument panel-side part Rp to the fire panel-side part Fp, which reduces the labor of workers as a whole.

Although in the above embodiments, the casings 1, 101, 201, 301, 401, 501, 601, 701, 801, and 901 are each configured to allow separation into the two parts of the instrument panel-side part Rp and the fire panel-side part Fp, this is not limitative, but they can be configured to allow separation into three or more parts.

### Industrial Applicability

This invention is suitable for an instrument panel module and an automotive air conditioner for the instrument panel module.

## Claims

1. An instrument panel module including:
an automotive air conditioner including a casing (1; 101; 201; 301; 401; 501; 601; 701; 801) having at least one of air-introducing means (4) for introducing air, blowing means (3) for blowing the air from said air-introducing means (4), cooling means (5) for cooling the air introduced by said blowing means (3) from said air-introducing means (4), heating means (7) for heating the air introduced by said blowing means (3) from said air-introducing means (4), and air-distributing means for distributing the cooled air or the heated air, and
an instrument panel (IP) adjacent to said automotive air conditioner,
**characterized in that** said casing (1; 101; 201; 301; 401; 501; 601; 701; 801) is separable at least into an instrument panel-side part (Rp) arranged adjacent to said instrument panel (IP), and a fire panel-side part (Fp) arranged adjacent to a fire panel (Fi), and
wherein at least said instrument panel-side part (Rp) is integrally connected to said instrument panel (IP).

2. An instrument panel module according to claim 1, wherein said instrument panel-side part (Rp) and said fire panel-side part (Fp) have respective connecting surfaces (1a, 1b) for connecting said instrument panel-side part and said fire panel-side part are thereat.

3. An instrument panel module according to claim 1 or 2, wherein said instrument panel-side part (Rp) can be attached to said fire panel-side part (Fp) from one direction.

4. An instrument panel module according to claim 1 or 2, wherein air conditioner components including said air-introducing means (4), said blowing means (3), said cooling means (5), said heating means (7), and said air-distributing means are classified according to workability for mounting thereof to a vehicle, and
wherein ones of said air conditioner components belonging to a first group are assigned to said instrument panel-side part (Rp), and ones of said air conditioner components belonging to a second group are assigned to said fire panel-side part (Fp).

5. An instrument panel module according to claim 1 or 2, wherein said instrument panel-side part (Rp) can be attached to said fire panel-side part (Fp) from one direction,
wherein air conditioner components including said air-introducing means (4), said blowing means (3), said cooling means (5), said heating means (7), and said air-distributing means are classified according to workability for mounting thereof to a vehicle, and
wherein ones of said air conditioner components belonging to a first group are assigned to said instrument panel-side part (Rp), and ones of said air conditioner components belonging to a second group are assigned to said fire panel-side part (Fp).

6. An instrument panel module according to claim 1 or 2, wherein said instrument panel-side part (Rp) can be detached from said fire panel-side part (Fp) in one direction.

7. An instrument panel module according to claim 1 or 2, wherein air conditioner components including said air-introducing means (4), said blowing means (3), said cooling means (5), said heating means (7), and said air-distributing means are classified according to maintainability, and
wherein ones of said air conditioner components belonging to a first group are assigned to said instrument panel-side part (Rp), and ones of said air conditioner components belonging to a second group are assigned to said fire panel-side part (Fp).

8. An instrument panel module according to claim 1 or 2, wherein said instrument panel-side part (Rp) can be detached from said fire panel-side part (Fp) in one direction,
wherein air conditioner components including said air-introducing means (4), said blowing means (3), said cooling means (5), said heating means (7), and said air-distributing means are classified according to maintainability, and
wherein ones of said air conditioner components belonging to a first group are assigned to said instrument panel-side part (Rp), and ones of said air conditioner components belonging to a second group are assigned to said fire panel-side part (Fp).

9. An instrument panel module according to any one of claims 4, 5, 7 or 8, wherein said ones of said air conditioner components belonging to said first group include said air-distributing means,
wherein said ones of said air conditioner components belonging to said second group include said cooling means (5) and said heating means (7),
wherein said air-distributing means comprises mode doors (M1, M2, M3) for opening and closing air outlet ports of said casing, and a drive mechanism (20) for driving said mode doors, and
wherein said cooling means and said heating means are both heat exchangers.

10. An instrument panel module according to any one of claims 4, 5, 7 or 8, wherein said ones of said air conditioner components belonging to said first group include said air-distributing means,
wherein said ones of said air conditioner components belonging to said second group include said heating means (7),
wherein said air-distributing means comprises mode doors (M1, M2, M3) for opening and closing air outlet ports of said casing, and a drive mechanism (20) for driving said mode doors, and
wherein said heating means is a heat exchanger.

11. An instrument panel module according to any one of claims 4, 5, 7 or 8, wherein said ones of said air conditioner components belonging to said first group include said heating means (7) and said air-distributing means,
wherein said ones of said air conditioner components belonging to said second group include said cooling means (5),
wherein said heating means (7) is an electric heater,
wherein said air-distributing means comprises mode doors (M1, M2, M3) for opening and closing air outlet ports of said casing, and a drive mechanism (20) for driving said mode doors, and
wherein said cooling means (5) is a heat exchanger.

12. An automotive air conditioner including an instrument panel-side casing (Rp) having at least one of air-introducing means (4) for introducing air, blowing means (3) for blowing the air from said air-introducing means (4), cooling means (5) for cooling the air introduced by said blowing means (3) from said air-introducing means (4), heating means (7) for heating the air introduced by said blowing means (3) from said air-introducing means (4), and air-distributing means for distributing the cooled air or the heated air,
**characterized in that** said instrument panel-side casing (Rp) is integrally connectable to an instrument panel (IP), and is also connectable to a fire panel-side casing (Fp) having at least one of air-introducing means (4) for introducing air, blowing means (3) for blowing the air from said air-introducing means (4), cooling means (5) for cooling the air introduced by said blowing means (3) from said air-introducing means (4), heating means (7) for heating the air introduced by said blowing means (3) from said air-introducing means (4), and air-distributing means for distributing the cooled air or the heated air, thus allowing to form an instrument panel module, said fire panel-side casing (Fp) being arranged adjacent to a fire panel (Fi) of a vehicle.

13. An automotive air conditioner according to claim 12, wherein said instrument panel-side casing (Rp) has a connecting surface (1a) for connecting said instrument panel-side casing (Rp) to said fire panel-side casing (Fp).

14. An automotive air conditioner according to claim 12 or 13, wherein said instrument panel-side casing (Rp) can be attached to said fire panel-side casing (Fp) from one direction.

15. An automotive air conditioner according to claim 12 or 13, wherein air conditioner components including said air-introducing means (4), said blowing means (3), said cooling means (5), said heating means (7), and said air-distributing means are classified according to workability for mounting thereof to a vehicle, and
wherein ones of said air conditioner components belonging to a first group are assigned to said instrument panel-side casing (Rp), and ones of said air conditioner components belonging to a second group are assigned to said fire panel-side casing (Fp).

16. An automotive air conditioner according to claim 12 or 13, wherein said instrument panel-side casing (Rp) can be attached to said fire panel-side casing (Fp) from one direction,
wherein air conditioner components including said air-introducing means (4), said blowing means (3), said cooling means (5), said heating means (7), and said air-distributing means are classified according to workability for mounting thereof to a vehicle, and
wherein ones of said air conditioner components belonging to a first group are assigned to said instrument panel-side casing (Rp), and ones of said air conditioner components belonging to a second group are assigned to said fire panel-side casing (Fp).

17. An automotive air conditioner according to claim 12 or 13, wherein said instrument panel-side casing (Rp) can be detached from said fire panel-side casing (Fp) in one direction.

18. An automotive air conditioner according to claim 12 or 13, wherein air conditioner components including said air-introducing means (4), said blowing means (3), said cooling means (5), said heating means (7), and said air-distributing means are classified according to maintainability, and
wherein ones of said air conditioner components belonging to a first group are assigned to said instrument panel-side casing (Rp), and ones of said air conditioner components belonging to a second group are assigned to said fire panel-side casing (Fp).

19. An automotive air conditioner according to claim 12 or 13, wherein said instrument panel-side casing (Rp) can be detached from said fire panel-side casing (Fp) in one direction,
wherein air conditioner components including said air-introducing means (4), said blowing means (3), said cooling means (5), said heating means (7), and said air-distributing means are classified according to maintainability, and
wherein ones of said air conditioner components belonging to a first group are assigned to said instrument panel-side casing (Rp), and ones of said air conditioner components belonging to a second group are assigned to said fire panel-side casing (Fp).

20. An automotive air conditioner according to any one of claims 15, 16, 18 or 19, wherein said ones of said air conditioner components belonging to said first group include said air-distributing means,
wherein said ones of said air conditioner components belonging to said second group include said cooling means (5) and said heating means (7),
wherein said air-distributing means comprises mode doors (M1, M2, M3) for opening and closing air outlet ports of said casing, and a drive mechanism (20) for driving said mode doors, and
wherein said cooling means (5) and said heating means (7) are both heat exchangers.

21. An automotive air conditioner according to any one of claims 15, 16, 18 or 19, wherein said ones of said air conditioner components belonging to said first group include said air-distributing means,
wherein said ones of said air conditioner components belonging to said second group include said heating means (7),
wherein said air-distributing means comprises mode doors (M1, M2, M3) for opening and closing air outlet ports of said casing, and a drive mechanism (20) for driving said mode doors, and
wherein said heating means (7) is a heat exchanger.

22. An automotive air conditioner according to any one of claims 15, 16, 18 or 19, wherein said ones of said air conditioner components belonging to said first group include said heating means (7) and said air-distributing means,
wherein said ones of said air conditioner components belonging to said second group include said cooling means (5),
wherein said heating means (7) is an electric heater,
wherein said air-distributing means comprises mode doors (M1, M2, M3) for opening and closing air outlet ports of said casing, and a drive mechanism (20) for driving said mode doors, and
wherein said cooling means is a heat exchanger.

23. An automotive air conditioner including a fire panel-side casing (Fp) having at least one of air-introducing means (4) for introducing air, blowing means (3) for blowing the air from said air-introducing means (4), cooling means (5) for cooling the air introduced by said blowing means (3) from said air-introducing means (4), heating means (7) for heating the air introduced by said blowing means (3) from said air-introducing means (4), and air-distributing means for distributing the cooled air or the heated air,
**characterized in that** said fire panel-side casing (Fp) is arranged adjacent to a fire panel (FI) of a vehicle, and is also connectable to an instrument panel-side casing (Rp) having at least one of air-introducing means (4) for introducing air, blowing means (3) for blowing the air from said air-introducing means (4), cooling means (5) for cooling the air introduced by said blowing means (3) from said air-introducing means (4), heating means (7) for heating the air introduced by said blowing means (3) from said air-introducing means (4), and air-distributing means for distributing the cooled air or the heated air, thus allowing to form an instrument panel module, said instrument panel-side casing (Rp) being integrally connected to said instrument panel (IP).

24. An automotive air conditioner according to claim 23, **characterized in that** when said fire panel-side casing (Fp) and said instrument panel-side casing (Rp) are connected to each other, an air passage is formed at a connected portion of said fire panel-side casing and said instrument panel-side casing.

25. An automotive air conditioner according to claim 23 or 24, wherein said fire panel-side casing (Fp) has a connecting surface (1b) for connecting said instrument panel-side casing (Rp) to said fire panel-side casing.

26. An automotive air conditioner according to claim 24 or 25, wherein said fire panel-side casing (Fp) allows that said instrument panel-side casing (Rp) to be attached thereto from one direction.

27. An automotive air conditioner according to claim 24 or 25, wherein air conditioner components including said air-introducing means (4), said blowing means (3), said cooling means (5), said heating means (7), and said air-distributing means are classified according to workability for mounting thereof to a vehicle, and
wherein ones of said air conditioner components belonging to a first group are assigned to said instrument panel-side casing (Rp), and ones of said air conditioner components belonging to a second group are assigned to said fire panel-side casing (Fp).

28. An automotive air conditioner according to claim 24 or 25, wherein said fire panel-side casing (Fp) allows said instrument panel-side casing (Rp) to be attached thereto from one direction,
wherein air conditioner components including said air-introducing means (4), said blowing means (3), said cooling means (5), said heating means (7), and said air-distributing means are classified according to workability for mounting thereof to a vehicle, and
wherein ones of said air conditioner components belonging to a first group are assigned to said instrument panel-side casing (Rp), and ones of said air conditioner components belonging to a second group are assigned to said fire panel-side casing (Fp).

29. An automotive air conditioner according to claim 24 or 25, wherein said fire panel-side casing (Fp) allows said instrument panel-side casing (Rp) to be detached therefrom in one direction.

30. An automotive air conditioner according to claim 24 or 25, wherein air conditioner components including said air-introducing means (4), said blowing means (3), said cooling means (5), said heating means (7), and said air-distributing means are classified according to maintainability, and
wherein ones of said air conditioner components belonging to a first group are assigned to said instrument panel-side casing (Rp), and ones of said air conditioner components belonging to a second group are assigned to said fire panel-side casing (Fp).

31. An automotive air conditioner according to claim 24 or 25, wherein said fire panel-side casing (Fp) allows said instrument panel-side casing (Rp) to be detached therefrom in one direction,
wherein air conditioner components including said air-introducing means (4), said blowing means (3), said cooling means (5), said heating means (7), and said air-distributing means are classified according to maintainability, and
wherein ones of said air conditioner components belonging to a first group are assigned to said instrument panel-side casing (Rp), and ones of said air conditioner components belonging to a second group are assigned to said fire panel-side casing (Fp).

32. An automotive air conditioner according to any one of claims 27, 28, 30 or 31, wherein said ones of said air conditioner components belonging to said. first group include said air-distributing means,
wherein said ones of said air conditioner components belonging to said second group include said cooling means (5) and said heating means (7),
wherein said air-distributing means comprises mode doors (M1, M2, M3) for opening and closing air outlet ports of said casing, and a drive mechanism (20) for driving said mode doors, and
wherein said cooling means (5) and said heating means (7) are both heat exchangers.

33. An automotive air conditioner according to any one of claims 27, 28, 30 or 31, wherein said ones of said air conditioner components belonging to said first group include said air-distributing means,
wherein said ones of said air conditioner components belonging to said second group include said heating means (7),
wherein said air-distributing means comprises mode doors (M1, M2, M3) for opening and closing air outlet ports of said casing, and a drive mechanism (20) for driving said mode doors, and
wherein said heating means (7) is a heat exchanger.

34. An automotive air conditioner according to any one of claims 27, 28, 30 or 31, wherein said ones of said air conditioner components belonging to said first group include said heating means (7) and said air-distributing means,
wherein said ones of said air conditioner components belonging to said second group include said cooling means (5),
wherein said heating means (7) is an electric heater,
wherein said air-distributing means comprises mode doors (M1, M2, M3) for opening and closing air outlet ports of said casing, and a drive mechanism (20) for driving said mode doors, and
wherein said cooling means (5) is a heat exchanger.

35. An air conditioning comprising a cooling heat exchanger (5), a heating heat exchanger (7) for heating air having passed through said cooling heat exchanger, an air-mixing door (6) for adjusting a proportion of air having passed said heating heat exchanger and air having not passed said heating heat exchanger, a mode-switching door (8) arranged at a downstream of said air-mixing door (6), a unit casing accommodating these, a plurality of air outlet ports which are opened and closed by said mode-switching door, and a link mechanism for adjusting a degree of opening of said air-mixing door and a degree of opening of said mode-switching door (8), and
wherein said unit casing is separable into an instrument panel-side casing (Rp) which contains said air-mixing door and said mode-switching door, and an fire panel-side casing (Fp) which is to be mounted adjacent to a fire panel (FI) of a vehicle and contains said cooling heat exchanger (5) and said heating heat exchanger (7), said fire panel-side casing (Fp) being connected to said instrument panel-side casing (Rp), which in turn is directly connected to said instrument panel, thus forming an instrument panel module,
wherein said link mechanism is mounted on an outer wall of said instrument panel-side casing.

36. An instrument panel module comprising an air conditioning unit for an instrument panel module, according to claim 35, and an instrument panel to which said air conditioning unit for an instrument panel module is integrally connected.

## Patentansprüche

1. Armaturenbrettmodul, umfassend:
eine Kraftfahrzeugklimaanlage, umfassend ein Gehäuse (1; 101; 201; 301;401; 501; 601; 701; 801) mit zumindest einer Luftzufuhreinrichtung (4) zum Zuführen von Luft, einer Gebläseeinrichtung (3) zum Beaufschlagen der Luft von der Luftzufuhreinrichtung (4), Kühlmitteln (5) zum Kühlen der durch die Gebläseeinrichtung (3) von der Luftzufuhreinrichtung (4) zugeführten Luft, Erwärmungsmitteln (7) zum Erwärmen der durch die Gebläseeinrichtung (3) von der Luftzufuhreinrichtung (4) zugeführten Luft, und Luftverteilungsmitteln zum Verteilen der gekühlten Luft oder der erwärmten Luft, und
ein Armaturenbrett (IP) benachbart zu der Kraftfahrzeugklimaanlage,
**dadurch gekennzeichnet, dass** das Gehäuse (1; 101; 201; 301; 401; 501; 601; 701; 801) trennbar ist in zumindest einen armaturenbrettseitigen Gehäuseteil (Rp) angeordnet benachbart zu dem Armaturenbrett (IP), und einen spritzwandseitigen Gehäuseteil (Fp), angeordnet benachbart einer Spritzwand oder eines Feuerschutzpaneeles (Fi), wobei zumindest der armaturenbrettseitige Gehäuseteil (Rp) mit dem Armaturenbrett (IP) einstückig verbunden ist.

2. Armaturenbrettmodul nach Anspruch 1, bei welchem der armaturenbrettseitige Gehäuseteil (Rp) und der spritzwandseitige Gehäuseteil (Fp) jeweilige Verbindungsflächen (1a, 1b) aufweisen, zur dortigen Verbindung des armaturenbrettseitigen Gehäuseteils und des spritzwandseitigen Gehäuseteiles.

3. Armaturenbrettmodul nach Anspruch 1 oder 2, bei welchem der armaturenbrettseitige Gehäuseteil (Rp) von einer Richtung an dem spritzwandseitigen Gehäuseteil (Fp) befestigt werden kann.

4. Armaturenbrettmodul nach Anspruch 1 oder 2, bei welchem Klimaanlagenkomponenten, einschließlich der Luftzufuhreinrichtung (4), der Gebläseeinrichtung (3), der Kühlmittel (5), der Heiz- oder Erwärmungsmittel (7) und der Luftverteilungsmittel klassifiziert sind, entsprechend der Handhabbarkeit bzgl. der Montage davon an einem Fahrzeug, und bei welchem erste der Klimaanlagenkomponenten, zugehörig zu einer ersten Gruppe dem armaturenbrettseitigen Gehäuseteil (Rp) zugeordnet sind und andere der Klimaanlagenkomponenten, zugehörig zu einer zweiten Gruppe dem spritzwandseitigen Gehäuseteil (Fp) zugeordnet sind.

5. Armaturenbrettmodul nach Anspruch 1 oder 2, bei welchem der armaturenbrettseitige Gehäuseteil (Rp) von einer Richtung an dem spritzwandseitigen Gehäuseteil (Fp) befestigt werden kann, wobei Klimaanlagenkomponenten, einschließlich der Luftzufuhreinrichtung (4), der Gebläseeinrichtung (3), der Kühlmittel (5), der Heiz- oder Erwärmungsmittel (7) und der Luftverteilungsmittel klassifiziert sind entsprechend der Handhabbarkeit zur Montage davon an einem Fahrzeug, und wobei erste der Klimaanlagenkomponenten, zugehörig zu einer ersten Gruppe dem amaturenbrettseitigen Gehäuseteil (Rp) zugeordnet sind und andere der Klimaanlagenkomponenten, zugehörig zu einer zweiten Gruppe dem spritzwandseitigen Gehäuseteil (Fp) zugeordnet sind.

6. Armaturenbrettmodul nach Anspruch 1 oder 2, bei welchem der armaturenbrettseitige Gehäuseteil (Rp) von dem spritzwandseitigem Gehäuseteil (Fp) in einer Richtung gelöst werden kann.

7. Armaturenbrettmodul nach Anspruch 1 oder 2, bei welchem Klimaanlagenkomponenten, einschließlich der Gebläseeinrichtung (3), der Kühlmittel (5), der Heiz- oder Erwärmmittel (7) und der Luftverteilungsmittel klassifiziert sind entsprechend der Wartungsfähigkeit, und bei welchem erste der Klimaanlagenkomponenten, zugehörig zu einer ersten Gruppe dem armaturenbrettseitigem Gehäuseteil (Rp) zugeordnet sind und andere der Klimaanlagenkomponenten, zugehörig zu einer zweiten Gruppe dem spritzwandseitigen Gehäuseteil (Fp) zugeordnet sind.

8. Armaturenbrettmodul nach Anspruch 1 oder 2, bei welchem der armaturenbrettseitige Gehäuseteil (Rp) in einer Richtung von dem spritzwandseitigen Gehäuseteil (Fp) gelöst werden kann, wobei Klimaanlagenkomponenten, einschließlich der Luftzufuhreinrichtung (4), der Gebläseeinrichtung (3), der Kühlmittel (5), der Heiz- oder Erwärmungsmittel (7) und der Luftverteilungsmittel klassifiziert sind entsprechend der Wartungsfähigkeit und wobei erste der Klimaanlagenkomponenten, zugehörig zu einer ersten Gruppe dem amaturenbrettseitigen Gehäuseteil (Rp) zugeordnet sind und andere der Klimaanlagenkomponenten, zugehörig zu einer zweiten Gruppe dem spritzwandseitigen Gehäuseteil (Fp) zugeordnet sind.

9. Armaturenbrettmodul nach einem der Ansprüche 4, 5, 7 oder 8, bei welchem die ersten der Klimaanlagenkomponenten, zugehörig zu der ersten Gruppe die Luftverteilungsmittel umfassen,
wobei die anderen der Klimaanlagenkomponenten, zugehörig zu der zweiten Gruppe, die Kühlmittel (5) und die Heiz- oder Erwärmungsmittel (7) umfassen, wobei die Luftverteilungsmittel Modenklappen (M 1, M 2, M 3) umfassen, zum Öffnen und Schließen von Luftauslassöffnungen des Gehäuses, sowie einen Antriebsmechanismus (20) zum Antreiben der Modenklappen, und
wobei die Kühlmittel und die Heiz- oder Erwärmungsmittel beide Wärmetauscher sind.

10. Armaturenbrettmodul nach einem der Ansprüche 4, 5, 7 oder 8, bei welchem die ersten der Klimaanlagenkomponenten, zugehörig zu der ersten Gruppe, die Luftverteilungsmittel umfassen,
wobei die anderen der Klimaanlagenkomponenten, zugehörig zu der zweiten Gruppe die Heiz- und Erwärmungsmittel (7) umfassen, wobei die Luftverteilungsmittel Modenklappen (M 1,M 2, M 3) umfassen, zum Öffnen und Schließen von Luftauslassöffnungen des Gehäuses, sowie einen Antriebsmechanismus (20) zum Antreiben der Modenklappen und
wobei die Heiz- oder Erwärmungsmittel ein Wärmetauscher sind.

11. Armaturenbrettmodul nach einem der Ansprüche 4, 5, 7 oder 8, bei welchem die ersten der Klimaanlagenkomponenten, zugehörig zu der ersten Gruppe die Heiz- und Erwärmungsmittel (7) und die Luftverteilungsmittel umfassen,
wobei die anderen der Klimaanlagenkomponenten, zugehörig zu der zweiten Gruppe die Kühlmittel (5) umfassen,
wobei die Erwärmungs- oder Heizmittel (7) ein Elektroheizer sind,
wobei die Luftverteilungsmittel Modenklappen (M 1, M 2, M 3) umfassen, zum Öffnen und Schließen von Luftauslassöffnungen des Gehäuses, sowie einen Antriebsmechanismus zum Antreiben der Modenklappen, und
wobei die Kühlmittel (5) ein Wärmetauscher sind.

12. Kraftfahrzeugklimananalage umfassend eine armaturenbrettseitiges Gehäuse (Rp) mit zumindest einem unter einer Luftzufuhreinrichtung (4) zum Zuführen von Luft, einer Gebläseeinrichtung (3) zu Beaufschlagen der Luft von der Luftzufuhreinrichtung (4), Kühlmittel (5), zum Kühlen der durch die Gebläseeinrichtung (3) von der Luftzufuhreinrichtung (4) zugeführten Luft, Heiz- oder Erwärmungsmitteln (7) zum Erwärmen der durch die Gebläseeinrichtung (3) von der Luftzufuhreinrichtung (4) zugeführten Luft und Luftverteilungsmittel zum Verteilen der gekühlten Luft oder der erwärmten Luft,
**dadurch gekennzeichnet, dass** das armaturenbrettseitige Gehäuse (Rp), einstückig verbindbar ist mit einem Armaturenbrett (Rp) und ebenfalls verbindbar ist mit einem spritzwandseitigem Gehäuse (Fp) mit zumindest einem unter der Luftzufuhreinrichtung (4) zum Zuführen von Luft, einer Gebläseeinrichtung (3) zum Beaufschlagen der Luft von der Luftzufuhreinrichtung (4), Kühlmitteln (5), zum Kühlen der durch die Gebläseeinrichtung (3) von der Luftzufuhreinrichtung (4) zugeführten Luft, Erwärmungs- oder Heizmitteln (7), zum Erwärmen oder Heizen der durch die Gebläseeinrichtung (3) von der Luftzufuhreinrichtung (4) zugeführten Luft und Luftverteilungsmitteln zum Verteilen der gekühlten Luft oder der erwärmten Luft, wodurch es ermöglicht ist, ein Armaturenbrettmodul auszubilden, wobei das spritzwandseitige Gehäuse (Fp) benachbart einer Spritzwand, oder eines Feuerschutzpaneeles (Fi) eines Fahrzeuges angeordnet ist.

13. Kraftfahrzeugklimaanlage nach Anspruch 12, bei welcher das armaturenbrettseitige Gehäuse (Rp) eine Verbindungs- oder Anschlussfläche (1a) aufweist, zum Anschließen oder Verbinden des armaturenbrettseitigen Gehäuses (Rp) mit dem spritzwandseitigem Gehäuse (Fp).

14. Kraftfahrzeugklimaanlage nach Anspruch 12 oder 13, bei welcher das armaturenbrettseitige Gehäuse (Rp) an dem spritzwandseitigem Gehäuse (Fp) von einer Richtung befestigt werden kann.

15. Kraftfahrzeugklimanalage nach Anspruch 12 oder 13, bei welcher Klimaanlagenkomponenten, einschließlich der Luftzufuhreinrichtung (4), der Gebläseeinrichtung (3), der Kühlmittel (5), der Heiz- oder Erwärmungsmittel (7) und der Luftverteilungsmittel klassifiziert sind entsprechend der Handhabbarkeit bzgl. der Montage davon an einem Fahrzeug, und bei welcher erste der Klimaanlagenkomponenten, zugehörig zu einer ersten Gruppe dem armaturenbrettseitigen Gehäuse (Rp) zugeordnet sind und andere der Klimaanlagenkomponenten, zugehörig zu einer zweiten Gruppe dem spritzwandseitigen Gehäuse (Fp) zugeordnet sind.

16. Kraftfahrzeugklimanalage nach Anspruch 12 oder 13, bei welcher das armaturenbrettseitige Gehäuse (Rp) von einer Richtung an dem spritzwandseitigen Gehäuse (Fp) befestigt werden kann, wobei Klimaanlagenkomponenten einschließlich der Luftzufuhreinrichtung (4), der Gebläseeinrichtung (3), der Kühlmittel (5) der Heiz- oder Erwärmungsmittel (7) und der Luftverteilungsmittel klassifiziert sind entsprechend der Handhabbarkeit zur Montage davon an einem Fahrzeug, und wobei erste der Klimaanlagenkomponenten, zugehörig zu einer ersten Gruppe dem amaturenbrettseitigen Gehäuse (Rp) zugeordnet sind und andere der Klimaanlagenkomponenten, zugehörig zu einer zweiten Gruppe dem spritzwandseitigen Gehäuse (Fp) zugeordnet sind.

17. Kraftfahrzeugklimanalage nach Anspruch 12 oder 13, bei welcher das armaturenbrettseitige Gehäuse (Rp) von dem spritzwandseitigem Gehäuse (Fp) in einer Richtung gelöst werden kann.

18. Kraftfahrzeugklimanalage nach Anspruch 12 oder 13, bei welcher Luftbehandlungskomponenten, einschließlich der Gebläseeinrichtung (3), der Kühlmittel (5), der Heiz- oder Erwärmmittel (7) und der Luftverteilungsmittel klassifiziert sind entsprechend der Wartungsfähigkeit, und bei welcher erste der Klimaanlagenkomponenten, zugehörig zu einer ersten Gruppe dem armaturenbrettseitigem Gehäuse (Rp) zugeordnet sind und andere der Klimaanlagenkomponenten, zugehörig zu einer zweiten Gruppe dem spritzwandseitigen Gehäuse (Fp) zugeordnet sind.

19. Kraftfahrzeugklimanalage nach Anspruch 12 oder 13, bei welcher das armaturenbrettseitige Gehäuse (Rp) in einer Richtung von dem spritzwandseitigen Gehäuse (Fp) gelöst werden kann, wobei Klimaanlagenkomponenten, einschließlich der Luftzufuhreinrichtung (4), der Gebläseeinrichtung (3), der Kühlmittel (5), der Heiz- oder Erwärmungsmittel (7) und der Luftverteilungsmittel klassifiziert sind entsprechend der Wartungsfähigkeit und wobei erste der Klimaanlagenkomponenten, zugehörig zu einer ersten Gruppe dem amaturenbrettseitigen Gehäuse (Rp) zugeordnet sind und andere der Klimaanlagenkomponenten, zugehörig zu einer zweiten Gruppe dem spritzwandseitigen Gehäuse (Fp) zugeordnet sind.

20. Kraftfahrzeugklimanalage nach einem der Ansprüche 15, 16, 18 oder 19, bei welcher die ersten der Klimaanlagenkomponenten, zugehörig zu der ersten Gruppe die Luftverteilungsmittel umfassen, wobei die anderen der Klimaanlagenkomponenten, zugehörig zu der zweiten Gruppe, die Kühlmittel (5) und die Heiz- oder Erwärmungsmittel (7) umfassen, wobei die Luftverteilungsmittel Modenklappen (M 1, M 2, M 3) umfassen, zum Öffnen und Schließen von Luftauslassöffnungen des Gehäuses, sowie einen Antriebsmechanismus (20) zum Antreiben der Modenklappen, und wobei die Kühlmittel und die Heiz- oder Erwärmungsmittel beide Wäremtauscher sind.

21. Kraftfahrzeugklimanalage nach einem der Ansprüche 15, 16, 18 oder 19, bei welcher die ersten der Klimaanlagenkomponenten, zugehörig zur ersten Gruppe, die Luftverteilungsmittel umfassen,
wobei die anderen der Klimaanlagenkomponenten, zugehörig zu der zweiten Gruppe die Heiz- und Erwärmungsmittel (7) umfassen, wobei die Luftverteilungsmittel Modenklappen (M 1,M 2, M 3) umfassen, zum Öffnen und Schließen von Luftauslassöffnungen des Gehäuses, sowie einen Antriebsmechanismus (20) zum Antreiben der Modenklappen und
wobei die Heiz- oder Erwärmungsmittel ein Wärmetauscher sind.

22. Kraftfahrzeugklimanalage nach einem der Ansprüche 15, 16, 18 oder 19, bei welcher die ersten der Klimaanlagenkomponenten, zugehörig zur ersten Gruppe die Heiz- und Erwärmungsmittel (7) und die Luftverteilungsmittel umfassen,
wobei die anderen der Klimaanlagenkomponenten, zugehörig zu der zweiten Gruppe die Kühlmittel (5) umfassen,
wobei die Erwärmungs- oder Heizmittel (7) ein Elektroheizer sind,
wobei die Luftverteilungsmittel Modenklappen (M 1, M 2, M 3) umfassen, zum Öffnen und Schließen von Luftauslassöffnungen des Gehäuses, sowie einen Antriebsmechanismus zum Antreiben der Modenklappen, und
wobei die Kühlmittel (5) ein Wärmetauscher sind.

23. Kraftfahrzeugklimaanlage, umfassend ein spritzwandseitiges Gehäuse (Fp) mit zumindest einem unter einer Luftzufuhreinrichtung (4), zum Zuführen von Luft, einer Gebläseeinrichtung (3), zum Beaufschlagen der Luft von der Luftzufuhreinrichtung (4), Kühlmitteln (5), zum Kühlen der durch die Gebläseeinrichtung (3) von der Luftzufuhreinrichtung (4) zugeführten Luft, Heiz- oder Erwärmungsmitteln (7), zum Erwärmen oder Heizen der durch die Gebläseeinrichtung (3) von der Luftzufuhreinrichtung (4) zugeführten Luft und Luftverteilungsmittel zum Verteilen der gekühlten Luft oder der erwärmten bzw. geheizten Luft, **dadurch gekennzeichnet, dass** das spritzwandseitige Gehäuse (Fp) benachbart zu einer Spritzwand oder eines Feuerschutzpaneeles (FI) eines Fahrzeuges angeordnet ist und ferner verbindbar ist mit einem armaturenbrettseitigen Gehäuse (Rp) mit zumindest einem unter einer Luftzufuhreinrichtung (4) zum Zuführen von Luft, einer Gebläseeinrichtung (3) zum Beaufschlagen der Luft von der Luftzufuhreinrichtung (4), Kühltmitteln (5) zum Kühlen der durch die Gebläseeinrichtung (3) von der Luftzufuhreinrichtung (4) zugeführten Luft, Heiz- oder Erwärmungsmitteln (7), zum Erwärmen oder Heizen der durch die Gebläseeinrichtung (3) von der Luftzufuhreinrichtung (4) zugeführten Luft und Luftverteilungsmitteln zum Verteilen der gekühlten Luft oder der erwärmten Luft, wodurch es ermöglicht ist ein Armaturenbrettmodul zu bilden, wobei das armaturenbrettseitige Gehäuse (Rp) einstückig mit dem Armaturenbrett (IP) verbunden ist.

24. Kraftfahrzeugklimaanlage nach Anspruch 23, **dadurch gekennzeichnet, dass** wenn das spritzwandseitige Gehäuse (Fp) und das armaturenbrettseitige Gehäuse (Rp) miteinander verbunden sind ein Luftdurchtritt ausgebildet ist an einem Verbindungsabschnitt des spritzwandseitigen Gehäuses und des armaturenbrettseitigen Gehäuses.

25. Kraftfahrzeugklimaanlage nach Anspruch 23 oder 24, bei welcher das spritzwandseitige Gehäuse (Fp) eine Verbindungsfläche (1b) aufweist, zum Verbinden oder Anschließen des armaturenbrettseitigen Gehäuses (Rp) an dem spritzwandseitigen Gehäuse.

26. Kraftfahrzeugklimaanlage nach Anspruch 24 oder 25, bei welcher das spritzwandseitige Gehäuse (Fp) es ermöglicht, dass das armaturenbrettseitige Gehäuse (Rp) diesbezüglich aus oder von einer Richtung befestigt wird.

27. Kraftfahrzeugklimanalage nach Anspruch 24 oder 25, bei welcher Klimaanlagenkomponenten, einschließlich der Luftzufuhreinrichtung (4), der Gebläseeinrichtung (3), der Kühlmittel (5), der Heiz- oder Erwärmungsmittel (7) und der Luftverteilungsmittel klassifiziert sind entsprechend der Handhabbarkeit bzgl. der Montage davon an einem Fahrzeug, und bei welcher erste der Klimaanlagenkomponenten, zugehörig zu einer ersten Gruppe dem armaturenbrettseitigen Gehäuse (Rp) zugeordnet sind und andere der Klimaanlagenkomponenten, zugehörig zu einer zweiten Gruppe dem spritzwandseitigen Gehäuse (Fp) zugeordnet sind.

28. Kraftfahrzeugklimanalage nach Anspruch 24 oder 25, bei welcher das armaturenbrettseitige Gehäuse (Rp) von einer Richtung an dem spritzwandseitigen Gehäuse (Fp) befestigt werden kann, wobei Klimaanlagenkomponenten einschließlich der Luftzufuhreinrichtung (4), der Gebläseeinrichtung (3), der Kühlmittel (5) der Heiz- oder Erwärmungsmittel (7) und der Luftverteilungsmittel klassifiziert sind entsprechend der Handhabbarkeit zur Montage davon an einem Fahrzeug, und wobei erste der Klimaanlagenkomponenten, zugehörig zu einer ersten Gruppe dem amaturenbrettseitigen Gehäuse (Rp) zugeordnet sind und andere der Klimaanlagenkomponenten, zugehörig zu einer zweiten Gruppe dem spritzwandseitigen Gehäuse (Fp) zugeordnet sind.

29. Kraftfahrzeugklimanalage nach Anspruch 24 oder 25, bei welcher das armaturenbrettseitige Gehäuse (Rp) von dem spritzwandseitigem Gehäuse (Fp) in einer Richtung gelöst werden kann.

30. Kraftfahrzeugklimanalage nach Anspruch 24 oder 25, bei welcher Klimaanlagenkomponenten, einschließlich der Gebläseeinrichtung (3), der Kühlmittel (5), der Heiz- oder Erwärmmittel (7) und der Luftverteilungsmittel klassifiziert sind entsprechend der Wartungsfähigkeit, und bei welcher erste der Klimaanlagenkomponenten, zugehörig zu einer ersten Gruppe dem armaturenbrettseitigem Gehäuse (Rp) zugeordnet sind und andere der Klimaanlagenkomponenten, zugehörig zu einer zweiten Gruppe dem spritzwandseitigen Gehäuse (Fp) zugeordnet sind.

31. Kraftfahrzeugklimanalage nach Anspruch 12 oder 13, bei welcher das armaturenbrettseitige Gehäuse (Rp) in einer Richtung von dem spritzwandseitigen Gehäuse (Fp) gelöst werden kann, wobei Klimaanlagenkomponenten, einschließlich der Luftzufuhreinrichtung (4), der Gebläseeinrichtung (3), der Kühlmittel (5), der Heiz- oder Erwärmungsmittel (7) und der Luftverteilungsmittel klassifiziert sind entsprechend der Wartungsfähigkeit und wobei erste der Klimaanlagenkomponenten, zugehörig zu einer ersten Gruppe dem amaturenbrettseitigen Gehäuse (Rp) zugeordnet sind und andere der Klimaanlagenkomponenten, zugehörig zu einer zweiten Gruppe dem spritzwandseitigen Gehäuse (Fp) zugeordnet sind.

32. Kraftfahrzeugklimanalage nach einem der Ansprüche 27, 28, 30 oder 31, bei welcher die ersten der Klimaanlagenkomponenten, zugehörig zu der ersten Gruppe die Luftverteilungsmittel umfassen, wobei die anderen der Klimaanlagenkomponenten, zugehörig zu der zweiten Gruppe, die Kühlmittel (5) und die Heiz- oder Erwärmungsmittel (7) umfassen, wobei die Luftverteilungsmittel Modenklappen (M 1, M 2, M 3) umfassen, zum Öffnen und Schließen von Luftauslassöffnungen des Gehäuses, sowie einen Antriebsmechanismus (20) zum Antreiben der Modenklappen, und wobei die Kühlmittel und die Heiz- oder Erwärmungsmittel beide Wäremtauscher sind.

33. Kraftfahrzeugklimanalage nach einem der Ansprüche 27, 28, 30 oder 31, bei welcher die ersten der Klimaanlagenkomponenten, zugehörig zur ersten Gruppe, die Luftverteilungsmittel umfassen,
wobei die anderen der Klimaanlagenkomponenten, zugehörig zu der zweiten Gruppe die Heiz- und Erwärmungsmittel (7) umfassen, wobei die Luftverteilungsmittel Modenklappen (M 1,M 2, M 3) umfassen, zum Öffnen und Schließen von Luftauslassöffnungen des Gehäuses, sowie einen Antriebsmechanismus (20) zum Antreiben der Modenklappen und wobei die Heiz- oder Erwärmungsmittel ein Wärmetauscher sind.

34. Kraftfahrzeugklimanalage nach einem der Ansprüche 27, 28, 30 oder 31, bei welcher die ersten der Klimaanlagenkomponenten, zugehörig zur ersten Gruppe die Heiz- und Erwärmungsmittel (7) und die Luftverteilungsmittel umfassen,
wobei die anderen der Klimaanlagenkomponenten, zugehörig zu der zweiten Gruppe die Kühlmittel (5) umfassen,
wobei die Erwärmungs- oder Heizmittel (7) ein Elektroheizer sind,
wobei die Luftverteilungsmittel Modenklappen (M 1, M 2, M 3) umfassen, zum Öffnen und Schließen von Luftauslassöffnungen des Gehäuses, sowie einen Antriebsmechanismus zum Antreiben der Modenklappen, und
wobei die Kühlmittel (5) ein Wärmetauscher sind.

35. Klimaanlage, umfassend einen Kühlwäremtauscher (5), einen Heizwärmetauscher (7), zum Erwärmen von Luft, die durch den Kühlwärmetauscher getreten ist, eine Luftmischklappe (6) zum Einstellen einer Proportion an Luft, die durch den Heizwärmetauscher getreten ist und an Luft, die nicht durch den Heizwärmetauscher getreten ist, eine Modenschaltklappe (8), angeordnet flussabwärts liegend der Luftmischklappe (6), ein Einheitengehäuse, all dies aufnehmend, eine Vielzahl von Luftauslassöffnungen, die mittels der Modenschaltklappe geöffnet und geschlossen werden, und einem Kopplungsmechanismus zum Einstellen eines Grades der Öffnung der Luftmischklappe und eines Grades der Öffnung der Modenschaltklappe (8) und
bei welcher das Einheitengehäuse trennbar ist in ein armaturenbrettseitiges Gehäuse (Rp), welches die Luftmischklappe und die Modenschaltklappe enthält und ein spritzwandseitiges Gehäuse (Fp), zu montieren benachbart einer Spritzwand oder eines Feuerschutzpaneeles (FI) eines Fahrzeuges und enthaltend den Kühlwärmetauscher (5) und den Heizwärmetauscher (7), wobei das spritzwandseitige Gehäuse (Fp) mit dem armaturenbrettseitigen Gehäuse (Rp) verbunden ist, welches wiederum unmittelbar verbunden ist mit dem Armaturenbrett, so dass ein Armaturenbrettmodul ausgebildet wird, wobei der Kopplungsmechanismus an einer Aussenwand des armaturenbrettseitigen Gehäuses montiert ist.

36. Armaturenbrettmodul, umfassend eine Klimaanlage für ein Armaturenbrettmodul nach Anspruch 35 und ein Armaturenbrett, mit welchem die Klimaanlageneinheit für ein Armaturenbrettmodul einstückig verbunden ist.

## Revendications

1. Module de tableau de bord incluant :
un climatiseur d'air automobile incluant un carter (1 ; 101 ; 201 ; 301 ; 401 ; 501 ; 601 ; 701 ; 801) ayant au moins un parmi des moyens d'introduction d'air (4) pour introduire l'air, des moyens de soufflage (3) pour souffler l'air à partir des dits moyens d'introduction d'air (4), des moyens de refroidissement (5) pour refroidir l'air introduit par les dits moyens de soufflage (3) à partir des dits moyens d'introduction d'air (4), des moyens de chauffage (7) pour chauffer l'air introduit par les dits moyens de soufflage (3) à partir des dits moyens d'introduction d'air (4), et des moyens de distribution d'air pour distribuer l'air refroidi ou l'air chauffé, et
un tableau de bord (IP) adjacent au dit climatiseur d'air automobile,
**caractérisé en ce que** le dit carter (1 ; 101 ; 201 ; 301 ; 401 ; 501 ; 601 ; 701 ; 801) est séparable au moins en une partie de coté-tableau de bord (Rp) disposée adjacente au dit tableau de bord (IP), et une partie de coté-panneau coupe-feu (Fp) disposée adjacente à un panneau coupe-feu (Fi), et
dans lequel au moins la dite partie de coté-tableau de bord (Rp) est intégralement connectée au dit tableau de bord (IP).

2. Module de tableau de bord selon la revendication 1, dans lequel la dite partie de coté-tableau de bord (Rp) et la dite partie de coté-panneau coupe-feu (Fp) ont des surfaces de connexion respectives (1a, 1b) pour connecter y la dite partie de coté-tableau de bord et la dite partie de coté-panneau coupe-feu sont

3. Module de tableau de bord selon la revendication 1 ou 2, dans lequel la dite partie de coté-tableau de bord (Rp) peut être attachée à la dite partie de coté-panneau coupe-feu (Fp) dans une direction.

4. Module de tableau de bord selon la revendication 1 ou 2, dans lequel les composants du climatiseur d'air incluant les dits moyens d'introduction d'air (4), les dits moyens de soufflage (3), les dits moyens de refroidissement (5), les dits moyens de chauffage (7), et les dits moyens de distribution d'air sont classifiés selon la maniabilité pour le montage en un véhicule, et
dans lequel ceux des dits composants du climatiseur d'air appartenant à un premier groupe sont assignés à la dite partie de coté-tableau de bord (Rp), et ceux des dits composants du climatiseur d'air appartenant à un second groupe sont assignés à la dite partie de coté-panneau coupe-feu (Fp).

5. Module de tableau de bord selon la revendication 1 ou 2, dans lequel la dite partie de coté-tableau de bord (Rp) peut être attachée à la dite partie de coté-panneau coupe-feu (Fp) dans une direction,
dans lequel les composants du climatiseur d'air incluant les dits moyens d'introduction d'air (4), les dits moyens de soufflage (3), les dits moyens de refroidissement (5), les dits moyens de chauffage (7), et les dits moyens de distribution d'air sont classifiés selon la maniabilité pour le montage en un véhicule, et
dans lequel ceux des dits composants du climatiseur d'air appartenant à un premier groupe sont assignés à la dite partie de coté-tableau de bord (Rp), et ceux des dits composants du climatiseur d'air appartenant à un second groupe sont assignés à la dite partie de coté-panneau coupe-feu (Fp).

6. Module de tableau de bord selon la revendication 1 ou 2, dans lequel la dite partie de coté-tableau de bord (Rp) peut être détachée de la dite partie de coté-panneau coupe-feu (Fp) dans une direction,

7. Module de tableau de bord selon la revendication 1 ou 2, dans lequel les composants du climatiseur d'air incluant les dits moyens d'introduction d'air (4), les dits moyens de soufflage (3), les dits moyens de refroidissement (5), les dits moyens de chauffage (7), et les dits moyens de distribution d'air sont classifiés selon la possibilité ou le besoin d' entretien, et
dans lequel ceux des dits composants du climatiseur d'air appartenant à un premier groupe sont assignés à la dite partie de coté-tableau de bord (Rp), et ceux des dits composants du climatiseur d'air appartenant à un second groupe sont assignés à la dite partie de coté-panneau coupe-feu (Fp).

8. Module de tableau de bord selon la revendication 1 ou 2, dans lequel la dite partie de coté-tableau de bord (Rp) peut être détachée de la dite partie de coté-panneau coupe-feu (Fp) dans une direction,
dans lequel les composants du climatiseur d'air incluant les dits moyens d'introduction d'air (4), les dits moyens de soufflage (3), les dits moyens de refroidissement (5), les dits moyens de chauffage (7), et les dits moyens de distribution d'air sont classifiés selon la possibilté ou le besoin d'entretien, et
dans lequel ceux des dits composants du climatiseur d'air appartenant à un premier groupe sont assignés à la dite partie de coté-tableau de bord (Rp), et ceux des dits composants du climatiseur d'air appartenant à un second groupe sont assignés à la dite partie de coté-panneau coupe-feu (Fp).

9. Module de tableau de bord selon une des revendications 4, 5, 7 ou 8, dans lequel ceux dits des dits composants du climatiseur d'air appartenant au dit un premier groupe incluent les dits moyens de distribution d'air,
dans lequel ceux dits des dits composants du climatiseur d'air appartenant au dit second groupe incluent les dits moyens de refroidissement (5) et les dits moyens de chauffage (7),dans lequel les dits moyens de distribution d'air comprennent des volets mode (M1, M2, M3) pour l'ouverture et la fermeture d' orifices d'échappement (d'écoulement) d'air du dit carter, et un mécanisme de commande (20) pour entrainer les dits volets mode, et
dans lequel les dits moyens de refroidissement et les dits moyens de chauffage sont tous les deux des échangeurs de chaleur.

10. Module de tableau de bord selon une des revendications 4, 5, 7 ou 8, dans lequel ceux dits des dits composants du climatiseur d'air appartenant au dit premier groupe incluent les dits moyens de distribution d'air,
dans lequel ceux dits des dits composants du climatiseur d'air appartenant à un second groupe incluent les dits moyens de chauffage (7),
dans lequel les dits moyens de distribution d'air comprennent des volets mode (M1, M2, M3) pour l'ouverture et la fermeture d' orifices d'échappement d'air du dit carter, et un mécanisme de commande (20) pour entrainer les dits volets mode, et
dans lequel les dits moyens de chauffage sont un échangeur de chaleur.

11. Module de tableau de bord selon une des revendications 4, 5, 7 ou 8, dans lequel ceux dits des dits composants du climatiseur d'air appartenant au dit premier groupe incluent les dits moyens de chauffage (7) et les dits moyens de distribution d'air,
dans lequel ceux dits des dits composants du climatiseur d'air appartenant au dit second groupe incluent les dits moyens de refroidissement (5),
dans lequel les dits moyens de chauffage (7) sont un radiateur électrique.
dans lequel les dits moyens de distribution d'air comprennent des volets mode (M1, M2, M3) pour l'ouverture et la fermeture d' orifices d'échappement d'air du dit carter, et un mécanisme de commande (20) pour commander (actionner) les dits volets mode, et
dans lequel les dits moyens de refroidissement sont un échangeur de chaleur.

12. Climatiseur d'air automobile incluant un carter partie de coté-tableau de bord (Rp) ayant au moins parmi un des moyens d'introduction d'air (4) pour introduire l'air, des moyens de soufflage (3) pour souffler l'air à partir des dits moyens d'introduction d'air (4), des moyens de refroidissement (5) pour refroidir l'air introduit par les dits moyens de soufflage (3) à partir des-dits moyens d'introduction d'air (4), des moyens de chauffage (7) pour chauffer l'air introduit par les dits moyens de soufflage (3) à partir des dits moyens d'introduction d'air (4), et des moyens de distribution d'air pour distribuer l'air refroidi ou l'air chauffé, et
**caractérisé en ce que** le dit carter de coté-tableau de bord (Rp) est intégralement connectable à un tableau de bord (IP), et est aussi connectable à un carter de coté-panneau coupe-feu (Fp) ayant au moins un parmi des moyens d'introduction d'air (4) pour introduire l'air, des moyens de soufflage (3) pour souffler l'air à partir des dits moyens d'introduction d'air (4), des moyens de refroidissement (5) pour refroidir l'air introduit par les dits moyens de soufflage (3) à partir des-dits moyens d'introduction d'air (4), des moyens de chauffage (7) pour chauffer l'air introduit par les dits moyens de soufflage (3) à partir des dits moyens d'introduction d'air (4), et des moyens de distribution d'air pour distribuer l'air refroidi ou l'air chauffé, de cette façon autorisant à former un module de tableau de bord, le dit carter de coté-panneau coupe-feu (Fp) étant disposé adjacent à un panneau coupe-feu (Fi) d'un véhicule.

13. Climatiseur d'air automobile selon la revendication 12, dans lequel le dit carter de coté-tableau de bord (Rp) a une surface de connexion (1a) pour connecter le dit carter de coté-tableau de bord (Rp) au dit carter de coté-panneau coupe-feu (Fp).

14. Climatiseur d'air automobile selon la revendication 12 ou 13, dans lequel le dit carter de coté-tableau de bord (Rp) peut être attaché au dit carter de coté-panneau coupe-feu (Fp) dans une direction.

15. Climatiseur d'air automobile selon la revendication 12 ou 13, dans lequel les composants du climatiseur d'air incluant les dits moyens d'introduction d'air (4), les dits moyens de soufflage (3), les dits moyens de refroidissement (5), les dits moyens de chauffage (7), et les dits moyens de distribution d'air sont classifiés selon la maniabilité pour le montage en un véhicule, et
dans lequel ceux des dits composants du climatiseur d'air appartenant à un premier groupe sont assignés au dit carter de coté-tableau de bord (Rp), et ceux des dits composants du climatiseur d'air appartenant à un second groupe sont assignés au dit carter de coté-panneau coupe-feu (Fp).

16. Climatiseur d'air automobile selon la revendication 12 ou 13, dans lequel le dit carter de coté-tableau de bord (Rp) peut être attaché au dit carter de coté-panneau coupe-feu (Fp) dans une direction,
dans lequel les composants du climatiseur d'air incluant les dits moyens d'introduction d'air (4), les dits moyens de soufflage (3), les dits moyens de refroidissement (5), les dits moyens de chauffage (7), et les dits moyens de distribution d'air sont classifiés selon la maniabilité pour le montage en un véhicule, et
dans lequel ceux des dits composants du climatiseur d'air appartenant à un premier groupe sont assignés au dit carter de coté-tableau de bord (Rp), et ceux des dits composants du climatiseur d'air appartenant à un second groupe sont assignés au dit carter de coté-panneau coupe-feu (Fp).

17. Climatiseur d'air automobile selon la revendication 12 ou 13, dans lequel le dit carter de coté-tableau de bord (Rp) peut être détaché du dit carter de coté-panneau coupe-feu (Fp) dans une direction.

18. Climatiseur d'air automobile selon la revendication 12 ou 13, dans lequel les composants du climatiseur d'air incluant les dits moyens d'introduction d'air (4), les dits moyens de soufflage (3), les dits moyens de refroidissement (5), les dits moyens de chauffage (7), et les dits moyens de distribution d'air sont classifiés selon la possibilité ou le besoin d'entretien, et dans lequel ceux des dits composants du climatiseur d'air appartenant à un premier groupe sont assignés au dit carter de coté-tableau de bord (Rp), et ceux des dits composants du climatiseur d'air appartenant à un second groupe sont assignés au dit carterde coté-panneau coupe-feu (Fp).

19. Climatiseur d'air automobile selon la revendication 12 ou 13, dans lequel le dit carter de coté-tableau de bord (Rp) peut être détaché du dit carter de coté-panneau coupe-feu (Fp) dans une direction,
dans lequel les composants du climatiseur d'air incluant les dits moyens d'introduction d'air (4), les dits moyens de soufflage (3), les dits moyens de refroidissement (5), les dits moyens de chauffage (7), et les dits moyens de distribution d'air sont classifiés selon la possibilité ou le besoin d'entretien, et
dans lequel ceux des dits composants du climatiseur d'air appartenant à un premier groupe sont assignés au dit carter de coté-tableau de bord (Rp), et ceux des dits composants du climatiseur d'air appartenant à un second groupe sont assignés au dit carter de coté-panneau coupe-feu (Fp).

20. Climatiseur d'air automobile selon une des revendications 15, 16, 18 ou 19, dans lequel ceux dits des dits composants du climatiseur d'air appartenant au dit premier groupe incluent les dits moyens de distribution d'air,
dans lequel ceux dits des dits composants du climatiseur d'air appartenant au dit second groupe incluent les dits moyens de refroidissement (5) et les dits moyens de chauffage (7),
dans lequel les dits moyens de distribution d'air comprennent des volets mode (M1, M2, M3) pour l'ouverture et la fermeture d'orifices d'échappement
d'air du dit carter, et un mécanisme de commande (20) pour entrainer les dits volets mode, et
dans lequel les dits moyens de refroidissement (5) et les dits moyens de chauffage (7) sont tous les deux des échangeurs de chaleur.

21. Climatiseur d'air automobile selon une des revendications 15, 16, 18 ou 19, dans lequel ceux dits des dits composants du climatiseur d'air appartenant au dit premier groupe incluent les dits moyens de distribution d'air,
dans lequel ceux dits des dits composants du climatiseur d'air appartenant au dit second groupe incluent les dits moyens de chauffage (7),
dans lequel les dits moyens de distribution d'air comprennent des volets mode (M1, M2, M3) pour l'ouverture et la fermeture d'orifices d'échappement d'air du dit carter, et un mécanisme de commande (20) pour entrainer les dits volets mode, et
dans lequel les dits moyens de chauffage (7) sont un échangeur de chaleur.

22. Climatiseur d'air automobile selon une des revendications 15, 16, 18 ou 19, dans lequel ceux dits des dits composants du climatiseur d'air appartenant au dit premier groupe incluent les dits moyens de chauffage (7) et les dits moyens de distribution d'air, dans lequel ceux dits des dits composants du climatiseur d'air appartenant au dit second groupe incluent les dits moyens de refroidissement (5),
dans lequel les dits moyens de chauffage (7) sont un radiateur électrique,
dans lequel les dits moyens de distribution d'air comprennent des volets mode (M1, M2, M3) pour l'ouverture et la fermeture d' orifices d'échappement d'air du dit carter, et un mécanisme de commande (20) pour entrainer les dits volets mode, et
dans lequel les dits moyens de refroidissement sont un échangeur de chaleur.

23. Climatiseur d'air automobile incluant un carter de coté-panneau coupe-feu (Fp) ayant au moins un parmi des moyens d'introduction d'air (4) pour introduire l'air, des moyens de soufflage (3) pour souffler l'air à partir des dits moyens d'introduction d'air (4), des moyens de refroidissement (5) pour refroidir l'air introduit par les dits moyens de soufflage (3) à partir des dits moyens d'introduction d'air (4), des moyens de chauffage (7) pour chauffer l'air introduit par les dits moyens de soufflage (3) à partir des dits moyens d'introduction d'air (4), et des moyens de distribution d'air pour distribuer l'air refroidi ou l'air chauffé,
**caractérisé en ce que** le dit carter de coté-panneau coupe-feu (Fp) est disposé adjacent à un panneau coupe-feu (Fi) d'un véhicule, et est aussi connectable à un carter de coté-tableau de bord (Rp) ayant au moins un parmi des moyens d'introduction d'air (4) pour introduire l'air, des moyens de soufflage (3) pour souffler l'air à partir des dits moyens d'introduction d'air (4), des moyens de refroidissement (5) pour refroidir l'air introduit par les-dits moyens de soufflage (3) à partir des dits moyens d'introduction d'air (4), des moyens de chauffage (7) pour chauffer l'air introduit par les dits moyens de soufflage (3) à partir des dits moyens d'introduction d'air (4), et des moyens de distribution d'air pour distribuer l'air refroidi ou l'air chauffé, de cette façon autorisant à former un module de tableau de bord, le dit carter de coté-tableau de bord (Rp) étant intégralement connecté au dit tableau de bord (IP).

24. Climatiseur d'air automobile selon la revendication 23, **caractérisé en ce que** quand le dit carter de coté-panneau coupe-feu (Fp) et dit carter de coté-tableau de bord (Rp) sont connectés l'un à l'autre, un passage d'air est formé à une partie connectée du dit carter de coté-panneau coupe-feu et du dit carter de coté-tableau de bord.

25. Climatiseur d'air automobile selon la revendication 23 ou 24, dans lequel le dit carter de coté-panneau coupe-feu (Fp) a une surface de connexion (1b) pour connecter le dit carter de coté-tableau de bord (Rp) au dit carter de coté-panneau coupe-feu.

26. Un climatiseur d'air automobile selon la revendication 24 ou 25, dans lequel le dit carter de coté-panneau coupe-feu (Fp) permet au dit carter de coté-tableau de bord (Rp) d'y être attaché dans une direction.

27. Climatiseur d'air automobile selon la revendication 24 ou 25, dans lequel les composants du climatiseur d'air incluant les dits moyens d'introduction d'air (4), les dits moyens de soufflage (3), les dits moyens de refroidissement (5), les dits moyens de chauffage (7), et les dits moyens de distribution d'air sont classifiés selon la maniabilité pour le montage en un véhicule, et
dans lequel ceux des dits composants du climatiseur d'air appartenant à un premier groupe sont assignés au dit carter de coté-tableau de bord (Rp), et ceux des dits composants du climatiseur d'air appartenant à un second groupe sont assignés au dit carter de coté-panneau coupe-feu (Fp).

28. Climatiseur d'air automobile selon la revendication 24 ou 25, dans lequel le dit carter de coté-panneau coupe-feu (Fp) permet au dit carter de coté-tableau de bord (Rp) d'y être attaché dans une direction,
dans lequel les composants du climatiseur d'air incluant les dits moyens d'introduction d'air (4), les dits moyens de soufflage (3), les dits moyens de refroidissement (5), les dits moyens de chauffage (7), et les dits moyens de distribution d'air sont classifiés selon la maniabilité pour le montage en un véhicule, et
dans lequel ceux des dits composants du climatiseur d'air appartenant à un premier groupe sont assignés au dit carter de coté-tableau de bord (Rp), et ceux des dits composants du climatiseur d'air appartenant à un second groupe sont assignés au dit carter de coté-panneau coupe-feu (Fp).

29. Climatiseur d'air automobile selon la revendication 24 ou 25, dans lequel le dit carter de coté-panneau coupe-feu (Fp) permet au dit carter de coté-tableau de bord (Rp) d'y être détaché dans une direction.

30. Climatiseur d'air automobile selon la revendication 24 ou 25, dans lequel les composants du climatiseur d'air incluant les dits moyens d'introduction d'air (4), les dits moyens de soufflage (3), les dits moyens de refroidissement (5), les dits moyens de chauffage (7), et les dits moyens de distribution d'air sont classifiés selon la possibilité ou le besoin d'entretien, et
dans lequel ceux des dits composants du climatiseur d'air appartenant à un premier groupe sont assignés au dit carter de coté-tableau de bord (Rp), et ceux des dits composants du climatiseur d'air appartenant à un second groupe sont assignés au dit carter de coté-panneau coupe-feu (Fp).

31. Climatiseur d'air automobile selon la revendication 24 ou 25, dans lequel le dit carter de coté-panneau coupe-feu (Fp) permet au dit carter de coté-tableau de bord (Rp) d'en être détaché dans une direction.
dans lequel les composants du climatiseur d'air incluant les dits moyens d'introduction d'air (4), les dits moyens de soufflage (3), les dits moyens de refroidissement (5), les dits moyens de chauffage (7), et les dits moyens de distribution d'air sont classifiés selon la possibilité ou le besoin d'entretien, et
dans lequel ceux des dits composants du climatiseur d'air appartenant à un premier groupe sont assignés au dit carter de coté-tableau de bord (Rp), et ceux des dits composants du climatiseur d'air appartenant à un second groupe sont assignés au dit carter de coté-panneau coupe-feu (Fp).

32. Climatiseur d'air automobile selon une des revendications 27, 28, 30 ou 31, dans lequel ceux dits des dits composants du climatiseur d'air appartenant au dit premier groupe incluent les dits moyens de distribution d'air,
dans lequel ceux dits des dits composants du climatiseur d'air appartenant au dit second groupe incluent les dits moyens de refroidissement (5) et les dits moyens de chauffage (7),
dans lequel les dits moyens de distribution d'air comprennent des volets mode (M1, M2, M3) pour l'ouverture et la fermeture d' orifices d'échappement d'air du dit carter, et un mécanisme de commande (20) pour entrainer les dits volets mode, et
dans lequel les dits moyens de refroidissement (5) et les dits moyens de chauffage (7) sont tous les deux des échangeurs de chaleur.

33. Climatiseur d'air automobile selon une des revendications 27, 28, 30 ou 31, dans lequel ceux dits des dits composants du climatiseur d'air appartenant au dit premier groupe incluent les dits moyens de distribution d'air,
dans lequel ceux dits des dits composants du climatiseur d'air appartenant au dit second groupe incluent les dits moyens de chauffage (7),
dans lequel les dits moyens de distribution d'air comprennent des volets mode (M1, M2, M3) pour l'ouverture et la fermeture d' orifices d'échappement d'air du dit carter, et un mécanisme de commande (20) pour entrainer les dits volets mode, et
dans lequel les dits moyens de chauffage (7) sont un échangeur de chaleur.

34. Climatiseur d'air automobile selon une des revendications 27, 28, 30 ou 31, dans lequel ceux dits des dits composants du climatiseur d'air appartenant au dit premier groupe incluent les dits moyens de chauffage (7) et les dits moyens de distribution d'air,
dans lequel ceux dits des dits composants du climatiseur d'air appartenant au dit second groupe incluent les dits moyens de refroidissement (5),
dans lequel les dits moyens de chauffage (7) sont un radiateur électrique,
dans lequel les dits moyens de distribution d'air comprennent des volets mode (M1, M2, M3) pour l'ouverture et la fermeture d' orifices d'échappement d'air du dit carter, et un mécanisme de commande (20) pour entrainer les dits volets mode, et
dans lequel les dits moyens de refroidissement (5) sont un échangeur de chaleur.

35. Climatiseur d'air comprenant un échangeur de chaleur refroidissant (5), un échangeur de chaleur chauffant (7) pour chauffer l'air ayant passé à travers l'échangeur de chaleur refroidissant, un volet de mixage d'air (6) pour ajuster une proportion d'air ayant passé le dit échangeur de chaleur chauffant et l'air n'ayant pas passé le dit échangeur de chaleur chauffant, un volet échange-mode (8) disposé en aval du dit volet de mixage d'air (6), un unité de carter logeant ceux-ci, une pluralité d'orifices d'échappement d'air qui sont ouverts et fermés par le dit volet échange-mode, et un mécanisme de lien pour ajuster un degré d'ouverture du dit volet de mixage d'air et un degré d'ouverture du dit volet échange-mode (8), et
dans lequel la dite unité de carter est séparable en un carter de coté-tableau de bord (Rp) qui contient le dit volet de mixage d'air et le dit volet échange-mode, et un carter de coté-panneau coupe-feu (Fp) qui est á monter adjacent à un panneau coupe-feu (FI) d'un véhicule et contient le dit échangeur de chaleur refroidissant (5) et le dit échangeur de chaleur chauffant (7), le dit carter de coté-panneau coupe-feu (Fp) étant connecté au dit carter de coté-tableau de bord (Rp), qui à tour de rôle est directement connecté au dit tableau de bord, de cette façon formant un module de tableau de bord.
dans lequel le dit mécanisme de lien est monté sur une paroi extérieure du dit carter de coté-tableau de bord.

36. Module de tableau de bord comprenant une unité de climatiseur d'air pour un module de tableau de bord, selon la revendication 35, et un tableau de bord auquel la dite unité climatiseur d'air pour un module de tableau de bord est intégralement connectée.
